# EUROPEAN PATENT APPLICATION

(11) **EP 4 841 941 A1**
(43) Date of publication of application: **18.11.2026**
(21) Application number: 24916036.7
(22) Date of filing: 11.01.2024
(51) Int. Cl.: H04L 12/10, H04W 52/02, H02J 50/80

(54) **METHOD FOR IMPLEMENTING CHARGING LINK AND DEVICE**

(71) Applicant: Shenzhen TCL New Technology Co., Ltd., Shenzhen, Guangdong 518000 (CN)
(72) Inventor: BAO, Zhanjing, Shenzhen, Guangdong 518000 (CN)
(74) Representative: Murgitroyd & Company
(86) International application number: PCT/CN2024/071840
(87) International publication number: WO 2025/147962

(57) **Abstract**

The present disclosure provides a method for implementing a charging link and a device. The method which is executed by a charging device and is used for implementing a charging link comprises: in response to detecting an ambient power (AMP) device, sending a wake-up signal to the AMP device; and in response to receiving a wake-up response signal from the AMP device, sending a periodic base charging signal to the AMP device. The AMP device is woken up by the wake-up signal, and the base charge signal is sent to the AMP device to provide the AMP device with a base power supply and to support the AMP device to execute subsequent operations.

## Description

### TECHNICAL FIELD

The present disclosure relates to the field of communications, and more particularly, to a method and device for implementing a charging link.

### BACKGROUND

The Internet of Things (IoT) is a component of devices for collecting data, sharing data with other devices, and communicating over the Internet. IoT not only can generate data, collect data, and communicate, but also supports making intelligent decisions based on the data, for example, featuring remote access, automation, intelligence, etc., making IoT devices widely deployed and used in application scenarios such as smart homes, smart manufacturing, smart agriculture, warehousing, and logistics. In these application scenarios, continuously investing huge amounts of electricity and continuously maintaining devices for IoT devices is extremely challenging. Therefore, IoT devices with extremely low power consumption and ultra-long life cycles have become a popular research direction.

To this end, the IEEE 802.11 working group recently established an ambient power (AMP) study group to conduct research on IoT devices obtaining energy from the environment for wireless communication. In the current phase, the AMP study group has discussed the following two types of devices for ultra-low power IoT devices:
1. AMP-only IoT devices: These have ultra-low complexity, ultra-low power consumption, a very small form factor, and are battery-free (i.e., do not use traditional batteries). They may not require power storage or have very limited power storage (e.g., a capacitor). This means that such devices are offline in most time and can be used for lightweight applications such as identification, positioning, and data reporting as small sensors.
2. AMP-assisted IoT devices: For AMP-assisted IoT devices, the design goal is to achieve a maintenance-free IoT network, for example, without needing battery replacement, having a lifetime life cycle. They have similar capability to traditional Wi-Fi devices but can provide relatively higher performance. That is, referring to traditional devices, they are optimized for power consumption and sustainability, supporting communication by obtaining energy from the environment and achieving maintenance-free operation.

### SUMMARY

The present disclosure provides a method and device for implementing a charging link, which can support AMP devices to perform energy harvesting, associate and communicate with an AP device, and negotiate various parameters of the charging link in an offline state, ensuring that the AMP device can still initiate or participate in data collection, transmission, etc., to complete wireless communication tasks of the AMP device within the IoT without a power cord or a large-capacity battery.

A first aspect of the present disclosure provides a method for implementing a charging link performed by a charging device, comprising: in response to detecting an ambient power (AMP) device, transmitting a wake-up signal to the AMP device; and in response to receiving a wake-up response signal from the AMP device, transmitting a periodic basic charging signal to the AMP device.

A second aspect of the present disclosure provides a method performed by an ambient power (AMP) device for implementing a charging link, comprising: in response to receiving a wake-up signal, transmitting a wake-up response signal to a charging device; and receiving a periodic basic charging signal from the charging device.

A third aspect of the present disclosure provides a method performed by an access point (AP) device for implementing a charging link, comprising: transmitting a detection indication for an ambient power (AMP) device to a charging device, wherein the detection indication is used to instruct the charging device to, in response to detecting the AMP device, transmit a wake-up signal to the AMP device; and receiving a charging capability parameter of the AMP device from the AMP device, wherein the charging capability parameter of the AMP device is transmitted based on a periodic basic charging signal.

A fourth aspect of the present disclosure provides a charging device, which may comprise a processor configured to execute the method according to the first aspect, the second aspect, or the third aspect.

A fifth aspect of the present disclosure provides an ambient power (AMP) device, which may comprise a processor configured to execute the method according to the first aspect, the second aspect, or the third aspect.

A sixth aspect of the present disclosure provides an access point (AP) device, which may comprise a processor configured to execute the method according to the first aspect, the second aspect, or the third aspect.

A seventh aspect of the present disclosure provides a chip, which may comprise a processor configured to call and run a computer program stored in a memory, to cause a device in which the chip is installed to execute the method according to the first aspect, the second aspect, or the third aspect.

An eighth aspect of the present disclosure provides a computer-readable storage medium having a computer program stored therein. The computer program causes a computer to execute the method according to the first aspect, the second aspect, or the third aspect. The computer-readable medium may comprise at least one from a group consisting of: a hard disk, a CD-ROM, an optical storage device, a magnetic storage device, a read only memory, a programmable read only memory, an erasable programmable read only memory, EPROM, an Electrically erasable programmable read only memory, and a flash memory.

A ninth aspect of the present disclosure provides a computer program product having a computer program stored therein. The computer program causes a computer to execute the method according to the first aspect, the second aspect, or the third aspect.

A tenth aspect of the present disclosure provides a computer program that causes a computer to execute the method according to the first aspect, the second aspect, or the third aspect.

According to at least one of the above aspects, the AMP device is woken up by the wake-up signal, and the basic charging signal is transmitted to the AMP device to provide a basic power supply for the AMP device and support the AMP device in performing subsequent operations.

### BRIEF DESCRIPTION OF THE DRAWINGS

In order to more clearly illustrate the embodiments of the present disclosure or the related art, the following figures will be described in the embodiments. It is obvious that the drawings are merely some embodiments of the present disclosure, a person having ordinary skill in this field can obtain other figures according to these figures without paying the premise, and the same reference numerals in the drawings indicate the same or similar elements.
FIG. 1 is a block diagram of a network architecture in which an AP device serves as a charging device according to some embodiments of the present disclosure.
FIG. 2 is a block diagram of a network architecture in which an auxiliary node serves as a charging device according to some embodiments of the present disclosure.
FIG. 3 is a block diagram of a network architecture in which a relay node serves as a charging device according to some embodiments of the present disclosure.
FIG. 4 is a block diagram of a network architecture in which a backscatter reader serves as a charging device according to some embodiments of the present disclosure.
FIG. 5 is a block diagram of a network architecture of a multi-charging link system according to some embodiments of the present disclosure.
FIG. 6 is a flowchart of a method for implementing a charging link performed by a charging device according to some embodiments of the present disclosure.
FIG. 7 is a diagram illustrating a structure of a frame for carrying a charging capability parameter of a charging device according to some embodiments of the present disclosure.
FIG. 8 is a diagram illustrating a structure of a frame for carrying a charging capability parameter of an AMP device according to some embodiments of the present disclosure.
FIG. 9 is a diagram illustrating a structure of a frame for carrying a charging signal parameter according to some embodiments of the present disclosure.
FIG. 10 is a flowchart of a method performed by an AMP device for implementing a charging link according to some embodiments of the present disclosure.
FIG. 11 is a flowchart of a method performed by an AP device for implementing a charging link according to some embodiments of the present disclosure.
FIG. 12 is a flowchart illustrating time-division transmission of a charging signal and a communication signal in the same frequency band when an AP device serves as a charging device according to some embodiments of the present disclosure.
FIG. 13 is a flowchart illustrating frequency-division transmission of a charging signal and a communication signal in different frequency bands when an AP device serves as a charging device according to some embodiments of the present disclosure.
FIG. 14 is a flowchart illustrating transmission of a charging signal and a communication signal when an auxiliary node serves as a charging device according to some embodiments of the present disclosure.
FIG. 15 is a flowchart illustrating transmission of a charging signal and a communication signal when a relay node serves as a charging device according to some embodiments of the present disclosure.
FIG. 16 is a flowchart illustrating transmission of a charging signal and a communication signal when a backscatter reader serves as a charging device according to some embodiments of the present disclosure.
FIG. 17 is a flowchart illustrating transmission of a charging signal and a communication signal in the case of multiple charging links according to some embodiments of the present disclosure.
FIG. 18 is a block diagram of an example system for wireless communication according to some embodiments of the present disclosure.

### DETAILED DESCRIPTION

Embodiments of the disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

In the present disclosure, "A or B" may mean "only A," "only B," or "both A and B."

In other words, in the present disclosure, "A or B" may be interpreted as "A and/or B." For example, in the present disclosure, "A, B, or C" may mean "only A," "only B," "only C," or "any combination of A, B, C."

A slash (/) or a comma used in the present disclosure may mean "and/or." For example, "A/B" may mean "A and/or B." Thus, "A/B" may mean "only A," "only B," or "both A and B." For example, "A, B, C" may mean "A, B, or C."

In the present disclosure, "at least one of A and B" may mean "only A," "only B," or "both A and B." Also, in the present disclosure, the expression "at least one of A or B" or "at least one of A and/or B" may be interpreted as "at least one of A and B."

Also, in the present disclosure, "at least one of A, B, and C" may mean "only A," "only B," "only C," or "any combination of A, B, and C." Also, "at least one of A, B, or C" or "at least one of A, B, and/or C" may mean "at least one of A, B, and C."

Furthermore, the terms "first," "second," etc., are used for descriptive purposes only and should not be understood as indicating or implying relative importance or implicitly indicating the number of technical features indicated. Thus, a feature defined with "first," "second" may explicitly or implicitly comprise one or more of said features. In the description of the present disclosure, "plurality" means two or more, unless otherwise expressly and specifically defined.

Based on the research status of ultra-low power IoT devices in the prior art, the inventors noted that these devices have several problems to be solved:
1. For an AMP device to complete Wi-Fi wireless communication, it must be compatible with traditional Wi-Fi devices and standards, meaning it must complete authentication and association with an AP before data transmission can occur. The authentication and association process requires the AMP device to send request frames to the AP device and receive response frames from the AP. For AMP-only devices, without a power cord and energy storage capability, they are in a powered-off state, making this process difficult to achieve.
2. For AMP-assisted devices, they need to have higher performance than traditional devices, such as lower power consumption, no need for device maintenance, etc. Environmental energy harvesting is required to support the communication process. However, for the environmental energy charging process, existing technologies lack management and control capability, and cannot charge according to the actual needs of AMP devices for specific transmission tasks and different charging modes.
3. For IoT, the number of devices within the network is huge, and the requirements for charging windows of a large number of AMP devices differ. It is necessary to allocate charging signals, authentication access, and transmission TXOPs to support wireless network communication for a large number of devices.
4. In the case where the charging device is not an access point (AP) device, the AMP device can only communicate with the AP, and the AP cannot communicate and negotiate with the charging device.

The present disclosure provides a method and device for implementing a charging link, aiming to solve one or more of the above problems.

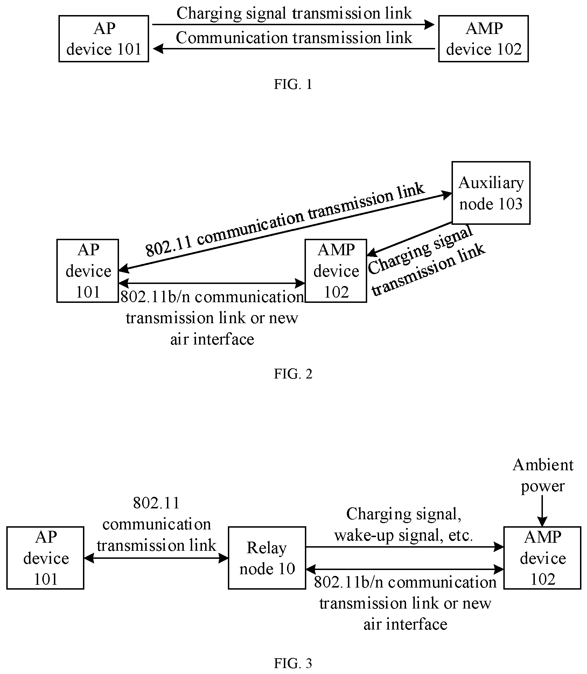

FIG. 1 illustrates a block diagram of a network architecture in which an AP device 101 serves as a charging device according to some embodiments of the present disclosure. Referring to FIG. 1, the network architecture shown in FIG. 1 may comprise one or more access point (AP) devices 101 and one or more ambient power (AMP) devices 102. For clarity, only one AP device 101 and one AMP device 102 are illustrated in FIG. 1.

The AP device 101 may be used as a charging device and may serve as an access point for the AMP device 102 to implement network communication for the AMP 102. The AMP device 102 may be defined as a device without a power cord or battery or having only a very small capacity energy storage battery and is configured to obtain energy from the environment to charge the device to support its communication. The AMP device 102 may comprise the aforementioned AMP-only IoT devices and AMP-assisted IoT devices, where AMP-only IoT devices comprise AMP Tags, and AMP-assisted IoT devices comprise AMP STAs (stations). Furthermore, the AMP device may also comprise, for example, user terminals supporting Wi-Fi communication functionality, user devices, access devices, subscriber stations, subscriber units, mobile stations, user agents, user equipment, where user terminals may comprise various handheld devices with wireless communication functionality, vehicle-mounted devices, wearable devices, IoT devices, computing devices, or other processing devices connected to a wireless modem, as well as various forms of User Equipment (UE), Mobile Stations (MS), terminals, terminal devices, portable communication devices, handsets, portable computing devices, entertainment devices, gaming devices or systems, Global Positioning System devices, or any other suitable device configured for network communication over a wireless medium, etc. Furthermore, the AMP device 102 may support the 802.11be standard or the next-generation WLAN standard after 802.11be, or the 802.11ah standard, or other 802.11 series standards.

The AP device 101 and the AMP device 102 may establish a communication transmission link based on the IEEE 802.11 communication protocol (e.g., 802.11b, 802.11n, etc.) or other air interface transmission protocols. Additionally, a charging signal transmission link from the AP device 101 to the AMP device 102 may also be established. Therefore, based on the network architecture shown in FIG. 1, charging tasks and communication tasks can be implemented between the AP device 101 and the AMP device 102. The charging signal in the charging signal transmission link and the communication signal in the communication transmission link may occur in the same frequency band, for example, both the transmission frequency band of the charging signal and the transmission frequency band of the communication signal may be Sub-1GHz (S1G) or both may be 2.4GHz. In this case, since the transmission frequency bands of the charging signal and the communication signal are the same, the transceiver of the AP device 101 and/or the transceiver of the AMP device 102 use time-division to transmit the charging signal and the communication signal. Alternatively, the charging signal in the charging signal transmission link and the communication signal in the communication transmission link may occur in different frequency bands, for example, the transmission frequency band of the charging signal may be S1G, while the transmission frequency band of the communication signal may be 2.4GHz. In this case, since the transmission frequency bands of the charging signal and the communication signal are different, the transceiver of the AP device 101 and/or the transceiver of the AMP device 102 use frequency-division to transmit the charging signal and the communication signal.

FIG. 2 illustrates a block diagram of a network architecture in which an auxiliary node 103 serves as a charging device according to some embodiments of the present disclosure. Referring to FIG. 2, the network architecture shown in FIG. 2 may comprise one or more AP devices 101, one or more AMP devices 102, and one or more auxiliary nodes 103. For clarity, only one AP device 101, one AMP device 102, and one auxiliary node 103 are illustrated in FIG. 2.

The AP device 101 may serve as an access point for the AMP device 102 to implement network communication for the AMP 102, and may be an access point device known in the art. The AMP device 102 may be the AMP device 102 shown in FIG. 1; for its definition and examples, please refer to the relevant description of the AMP device 102 in FIG. 1, which is not repeated for brevity. The auxiliary node 103 may be an auxiliary node known in the art and may be used as a charging device for charging the AMP device 102.

As shown in FIG. 2, the AP device 101 and the AMP device 102 may establish a communication transmission link based on the 802.11b/n communication protocol or a new air interface protocol, and the communication frequency band may be 2.4GHz or S1G, etc. Further, the AP device 101 and the auxiliary node 103 may establish a communication transmission link based on the 802.11 communication protocol, and the communication frequency band may be Sub-7GHz or millimeter wave band, etc. Furthermore, a charging signal transmission link from the auxiliary node 103 to the AMP device 102 may be established based on a charging signal or a wake-up signal. Therefore, based on the network architecture shown in FIG. 2, communication tasks can be implemented between the AP device 101 and the AMP device 102 and between the AP device 101 and the auxiliary node 103, and a charging task can be implemented between the AMP device 102 and the auxiliary node 103.

FIG. 3 illustrates a block diagram of a network architecture in which a relay node 104 serves as a charging device according to some embodiments of the present disclosure. Referring to FIG. 3, the network architecture shown in FIG. 3 may comprise one or more AP devices 101, one or more AMP devices 102, and one or more relay nodes 104. For clarity, only one AP device 101, one AMP device 102, and one relay node 104 are illustrated in FIG. 3, where both the relay node 104 and the AMP device 102 are associated under the same AP device 101.

The AP device 101 may be an access point device known in the art. The AMP device 102 may be the AMP device 102 shown in FIG. 1; for its definition and examples, please refer to the relevant description of the AMP device 102 in FIG. 1, which is not repeated for brevity. The relay node 104 may be a relay node known in the art and is used as a charging device for charging the AMP device 102.

As shown in FIG. 3, the AP device 101 and the relay node 104 may establish a communication transmission link based on the 802.11 communication protocol. Further, the relay node 104 and the AMP device 102 may establish a communication transmission link based on the 802.11b/n communication protocol or a new air interface protocol. Furthermore, a charging signal transmission link from the relay node 104 to the AMP device 102 may be established based on a charging signal or a wake-up signal, among others. Therefore, based on the network architecture shown in FIG. 3, communication tasks can be implemented between the AP device 101 and the relay node 104 and between the relay node 104 and the AMP device 102, and a charging task can be implemented between the AMP device 102 and the relay node 104. Additionally, the AMP device 102 may also obtain environmental energy such as light energy, thermal energy, etc., from the environment (e.g., a small solar panel) to charge itself.

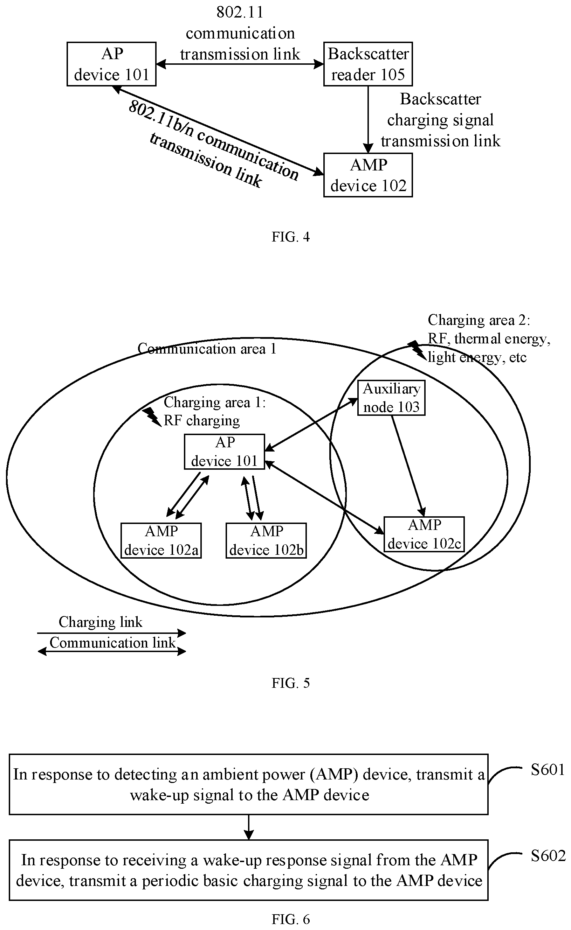

FIG. 4 illustrates a block diagram of a network architecture in which a backscatter reader 105 serves as a charging device according to some embodiments of the present disclosure. Referring to FIG. 4, the network architecture shown in FIG. 4 may comprise one or more AP devices 101, one or more AMP devices 102, and one or more backscatter readers 105. For clarity, only one AP device 101, one AMP device 102, and one backscatter reader 105 are illustrated in FIG. 4.

The AP device 101 may serve as an access point for the AMP device 102 to implement network communication for the AMP 102, and may be an access point device known in the art. The AMP device 102 may be the AMP device 102 shown in FIG. 1; for its definition and examples, please refer to the relevant description of the AMP device 102 in FIG. 1, which is not repeated for brevity. The backscatter reader 105 may be a reader known in the art and may be used as a charging device for charging the AMP device 102, wherein the backscatter reader 105 can charge the AMP device 102 via backscatter, thus requiring the backscatter reader 105 to be placed within a specified range (e.g., tens of centimeters) of the AMP device 102.

As shown in FIG. 4, the AP device 101 and the AMP device 102 may establish a communication transmission link based on the 802.11b/n communication protocol or a new air interface protocol. Further, the AP device 101 and the backscatter reader 105 may establish a communication transmission link based on the 802.11 communication protocol. Furthermore, a charging signal transmission link from the backscatter reader 105 to the AMP device 102 may be established based on a charging signal or a wake-up signal. Therefore, based on the network architecture shown in FIG. 4, communication tasks can be implemented between the AP device 101 and the AMP device 102 and between the AP device 101 and the backscatter reader 105, and a charging task can be implemented between the AMP device 102 and the backscatter reader 105.

FIG. 5 illustrates a block diagram of a network architecture of a multi-charging link system according to some embodiments of the present disclosure. Referring to FIG. 5, the network architecture shown in FIG. 5 may comprise one or more AP devices 101, a plurality of AMP devices 102, and one or more auxiliary nodes 103. For clarity, only one AP device 101, three AMP devices 102 (e.g., 102a, 102b, and 102c), and one auxiliary node 103 are illustrated in FIG. 5.

The AP device 101 may be used as one charging device to charge AMP devices 102a and 102b, while the auxiliary node 103 serves as another charging device to charge AMP device 102c. Furthermore, the AP device 101 may serve as an access point for the AMP devices 102 to implement network communication for the AMPs 102 and may be an access point device known in the art. The AMP devices 102a, 102b, and 102c may be the AMP devices 102 shown in FIG. 1; for their definitions and examples, please refer to the relevant description of the AMP device 102 in FIG. 1, which is not repeated for brevity. The auxiliary node 103 may be an auxiliary node known in the art.

As shown in FIG. 5, the AMP devices 102a, 102b, 102c, and the auxiliary node 103 can all establish communication transmission links with the AP device 101 based on the 802.11b/n communication protocol or a new air interface protocol, thus forming a first communication area, i.e., communication area 1. Further, respective charging signal transmission links from the AP device 101 to AMP devices 102a and 102b can be established based on Radio Frequency (RF) signals, etc., thus forming a first charging area, i.e., charging area 1. Furthermore, a charging signal transmission link from the auxiliary node 103 to AMP device 102c can be established based on environmental energy such as RF signals, light energy, thermal energy, vibration, etc., thus forming a second charging area, i.e., charging area 2. Therefore, based on the network architecture shown in FIG. 5, communication tasks can be implemented between multiple devices, and charging tasks for multiple AMP devices 102 can be implemented through multiple different charging devices (such as the AP device 102, the auxiliary node 103, and/or the backscatter reader, etc.). This network architecture can be applied to scenarios such as multi-device, multi-connection IoT, and the AP device 101 can control and manage communication links and charging links for devices under this network architecture.

The above embodiments describe examples of some components and their connection relationships in different network architectures as shown in FIGS. 1 to 5, which are mainly for illustrative purposes and not limiting.

FIG. 6 illustrates a flowchart of a method for implementing a charging link performed by a charging device according to some embodiments of the present disclosure. The order of describing method blocks is not intended to be construed as limiting, and any number of the described method blocks can be skipped or combined in any order to implement the method or an alternative method. Generally, any of the components, modules, methods, and operations described herein can be implemented using software, firmware, hardware (e.g., fixed logic circuits), manual processing, or any combination thereof. Some operations of the example methods can be described in the general context of executable instructions stored on a computer-readable memory local to and/or remote from a computer processing system, and implementations can comprise software applications, programs, functions, etc. Alternatively or additionally, any of the functions described herein can be performed, at least in part, by one or more hardware logic components, such as, but not limited to, field programmable gate arrays (FPGAs), application specific integrated circuits (ASICs), application specific standard products (ASSPs), system on chips (SoCs), complex programmable logic devices (CPLDs), etc. The method of the present disclosure is applicable to any of the network architectures shown in FIGS. 1 to 5 and is described by taking the corresponding network architecture shown in FIGS. 1 to 5 as an example, without limitation.

Referring to FIG. 6, at block 601, a charging device may, in response to detecting an ambient power (AMP) device, transmit a wake-up signal to the AMP device. The charging device may be any of the charging devices shown in FIGS. 1 to 5 (e.g., AP device 101, auxiliary node 103, relay node 104, backscatter reader 105), and the AMP device may be the AMP device 102 shown in any of FIGS. 1 to 5. The wake-up signal may be a trigger signal defined by a standard protocol, used for basic charging and waking up of the detected AMP device. This wake-up signal designs a uniform set of charging signal parameters for all AMP devices, and these charging signal parameters may comprise at least one of the following: transmission power, modulation scheme, transmission frequency band, identifier of the charging device, detection period, etc. Specifically, after the charging device is powered on or booted up to complete initialization (e.g., the charging transmitter of the charging device is turned on or initialized), the charging device starts a timer and attempts to detect the power receiver of the AMP device during the detection period, and after detecting the power receiver, transmits the wake-up signal to the AMP device.

At block 602, the charging device may, in response to receiving a wake-up response signal from the AMP device, transmit a periodic basic charging signal to the AMP device. The wake-up response signal may be a response signal defined by a standard protocol carrying the MAC address or unique identifier of the AMP device to identify that the response signal comes from that AMP device. Furthermore, when the AP device detects the presence of the AMP device, it refreshes the timer and waits for the wake-up response signal in response to the wake-up signal during a response period. If the AP device receives the wake-up response signal within the response period, it starts transmitting the periodic basic charging signal to the AMP device. Otherwise, the AP device does not transmit the periodic basic charging signal to the AMP device. The periodic basic charging signal may be a periodic charging signal defined by a standard protocol used to support the exchange of charging capability parameters and the negotiation of charging signal parameters between the charging device and the AMP device. This periodic basic charging signal may comprise at least one of the following: the transmission power of the charging device, basic signal power, modulation scheme, transmission frequency band, identifier of the charging device, charging window, charging window offset, and charging signal interval. It should be understood that in some embodiments, there may be multiple basic charging signals and/or they may be non-periodic, which does not affect the functionality of the present disclosure. Furthermore, due to the ultra-low power consumption limitation of AMP devices, when the charging device is an AP device, the wake-up response signal may be combined with an authentication process, for example, by transmitting an authentication request frame or a re-authentication request frame to the AP device to transmit the wake-up response signal to the AP device. Alternatively, the wake-up response signal may also be combined with an association process, for example, by transmitting an association request frame or a re-association request frame to the AP device to transmit the wake-up response signal to the AP device. Alternatively, the wake-up response signal may also be transmitted to the AP device by transmitting a probe response frame. Furthermore, the implementation of the wake-up response signal is not limited thereto.

According to this technical solution of the present disclosure, waking up the AMP device via the wake-up signal and transmitting the basic charging signal to the AMP device can provide a basic power supply for the AMP device and support the AMP device in executing subsequent operations.

Furthermore, in some implementations, the AMP device and the AP device can negotiate the configuration of the charging link, and the AP device and the AMP device can complete the definition of charging signal parameters, the configuration of the charging signal, and the management and control of the charging signal. A detailed description is provided below.

In some implementations, the method may further comprise: providing a charging capability parameter of the charging device. Exemplarily, this charging capability parameter can be used to be provided to the AP device or the AMP device. This operation is part of the charging capability exchange between the charging device and the AMP device, used to implement various charging-related operations (such as negotiation requests and parameter determination, etc.).

Further, when the charging device is the AP device 101 or the relay node 104, the providing the charging capability parameter of the charging device may comprise: directly transmitting the charging capability parameter of the charging device to the AMP device. Alternatively, when the charging device is the auxiliary node 103 or the backscatter reader 105, the providing the charging capability parameter of the charging device may comprise: transmitting the charging capability parameter of the charging device to the AMP device via the AP device, wherein the AP device may be the AP device 101 shown in any of FIGS. 1 to 5.

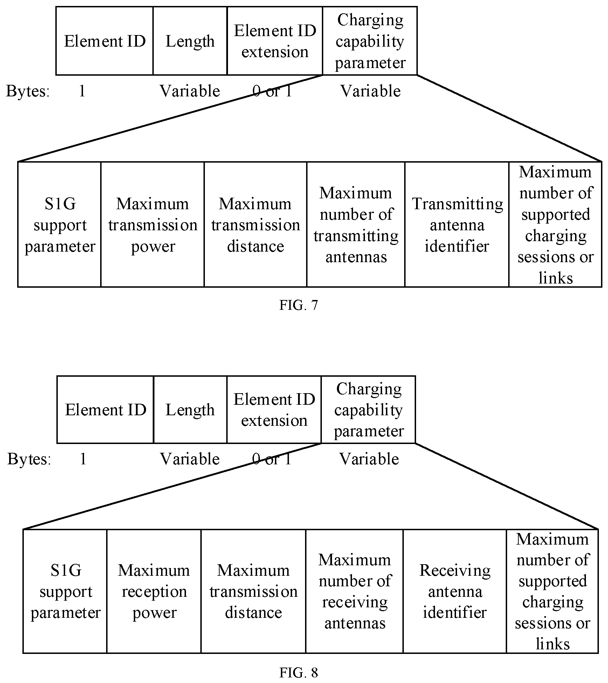

Furthermore, the charging capability parameter of the charging device may comprise at least one of the following: an S1G support parameter (S1G supported), a maximum transmission power (Max transmission power), a maximum transmission distance (Max communication distance), a maximum number of transmitting antennas (Max TX antennas), a transmitting antenna identifier (TX antenna ID), and a maximum number of supported charging sessions or links (Max supported sessions). In some embodiments, the providing the charging capability parameter of the charging device comprises: providing a frame for carrying the charging capability parameter; wherein the frame for carrying the charging capability parameter comprises a charging capability element, the charging capability element comprises an element ID field and a charging capability parameter field, wherein the element ID field indicates an ID identifier of the charging capability element, and the charging capability parameter field indicates the charging capability parameter of the charging device. Furthermore, the charging capability element further comprises a length field and an element ID extension field, wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length. The structure of the frame for carrying the charging capability parameter of the charging device can be designed as shown in FIG. 7, and the charging capability element is used to carry the charging capability parameter of the charging device.

In FIG. 7, for illustrative purposes, the charging capability parameter field shows only the S1G support parameter, maximum transmission power, maximum transmission distance, maximum number of transmitting antennas, transmitting antenna identifier, and maximum number of supported charging sessions or links. However, the charging capability parameter of the charging device is not limited thereto and may also comprise other charging capability parameters of the charging device known in the art.

In some implementations, when the charging device is an AP device or a relay node, it can directly receive the charging capability parameter of the AMP device. In some implementations, when the charging device is an auxiliary node or a backscatter reader, it can receive the charging capability parameter of the AMP device via the AP device. The charging capability parameter of the AMP device comprises at least one of the following: an S1G support parameter (S1G supported), a maximum reception power (Max RX power), a maximum transmission distance (Max communication distance), a maximum number of receiving antennas (Max RX antennas), a receiving antenna identifier (RX antenna ID), and a maximum number of supported charging sessions or links (Max supported sessions). In some embodiments, the receiving the charging capability parameter of the AMP device comprises: receiving a frame for carrying the charging capability parameter of the AMP device; wherein the frame for carrying the charging capability parameter of the AMP device comprises a charging capability element, the charging capability element comprises an element ID field and a charging capability parameter field, wherein the element ID field indicates an ID identifier of the charging capability element, and the charging capability parameter field indicates the charging capability parameter of the AMP device. Furthermore, the charging capability element further comprises a length field and an element ID extension field, wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length. The structure of the frame for carrying the charging capability parameter of the AMP device can be designed as shown in FIG. 8, and the charging capability element is used to carry the charging capability parameter of the AMP device.

In FIG. 8, for illustrative purposes, the charging capability parameter field of the AMP device shows only the S1G support parameter, maximum reception power, maximum transmission distance, maximum number of receiving antennas, receiving antenna identifier, and maximum number of supported charging sessions or links. However, the charging capability parameter of the AMP device is not limited thereto and may also comprise other charging capability parameters of the AMP device known in the art.

In some implementations, the method may further comprise: transmitting a negotiated charging signal determined based on a charging signal parameter to the AMP device, wherein the charging signal parameter is determined based on a negotiation between the AP device and the AMP device. Exemplarily, this negotiated charging signal may have the determined charging signal parameter and be used to provide power for subsequent data transmission of the AMP device. Alternatively, the negotiated charging signal may be periodic or non-periodic.

In some examples, when the charging device is the AP device, the charging signal parameter may be determined by the following operations: transmitting a query frame to the AMP device, wherein the query frame comprises query information querying whether the AMP device needs charging negotiation and indicates a transmission opportunity (TXOP) allocated by the AP device for the AMP device; receiving, within the TXOP, a query response frame carrying feedback indicating that negotiation is not required from the AMP device; transmitting a confirmation frame indicating that negotiation is not required to the AMP device; and maintaining, based on the confirmation frame, the periodic basic charging signal to charge the AMP device.

Alternatively, when the charging device is the AP device, the charging signal parameter may also be determined by the following operations: transmitting, by the AP device, a query frame to the AMP device, wherein the query frame comprises query information querying whether the AMP device needs charging negotiation and indicates a transmission opportunity (TXOP) allocated by the AP device for the AMP device; transmitting, by the AMP device within the TXOP, a negotiation request frame carrying a charging signal parameter requested by the AMP device and/or a feedback result to the AP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay; transmitting, by the AP device, a negotiation response frame comprising a charging signal parameter suggested by the AP device and/or a response result to the AMP device; and determining, by the AP device, the charging signal parameter based on the negotiation request frame and the negotiation response frame.

Alternatively, when the charging device is the AP device, the charging signal parameter may also be determined by the following operations: transmitting a query frame to the AMP device, wherein the query frame comprises query information querying whether the AMP device needs charging negotiation and indicates a transmission opportunity (TXOP) allocated by the AP device for the AMP device; receiving, within the TXOP, a negotiation request frame carrying feedback indicating a delayed query and a requested charging signal parameter from the AMP device, wherein the charging signal parameter further comprises at least one of the following: a delay time and n query intervals, where n is a positive integer greater than or equal to 1; and transmitting, to the AMP device, a negotiation response frame comprising one of the following: confirmation information comprising: accepting the delayed query, maintaining the periodic basic charging signal to charge the AMP device, and re-transmitting the query frame to the AMP device and re-allocating a TXOP for the AMP device after the delay time or the n query intervals; and rejection information and a TXOP allocated for the AMP device, for the AP device to continue negotiation with the AMP to determine the charging signal parameter.

In other examples, when the charging device is the auxiliary node or the backscatter reader, the method further comprises: receiving a charging signal parameter determined based on a negotiation between the AMP device and the AP device; and transmitting a negotiated charging signal determined based on the charging signal parameter to the AMP device.

In yet other examples, when the charging device is the relay node, the charging signal parameter may be determined by the following operations: transmitting, by the AP device via the relay node, a query frame to the AMP device, wherein the query frame comprises query information querying whether the AMP device needs charging negotiation and indicates a transmission opportunity (TXOP) allocated by the AP device for the AMP device; transmitting, by the AMP device within the TXOP, a query response frame carrying feedback indicating that negotiation is not required to the AP device via the relay node; transmitting, by the AP device, a confirmation frame indicating that negotiation is not required to the relay node; and maintaining, by the relay node based on the confirmation frame, the periodic basic charging signal to charge the AMP device.

Alternatively, when the charging device is the relay node, the charging signal parameter may be determined by the following operations: transmitting, by the AP device via the relay node, a query frame to the AMP device, wherein the query frame comprises query information querying whether the AMP device needs charging negotiation and indicates a transmission opportunity (TXOP) allocated by the AP device for the AMP device; transmitting, by the AMP device within the TXOP via the relay node, a negotiation request frame carrying a charging signal parameter requested by the AMP device and/or a feedback result to the AP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay; transmitting, by the AP device via the relay node, a negotiation response frame comprising a charging signal parameter suggested by the AP device and/or a response result to the AMP device; determining, by the AP device, the charging signal parameter based on the negotiation request frame and the negotiation response frame; and transmitting, by the AP device, a confirmation frame carrying the charging signal parameter to the relay node.

Alternatively, when the charging device is the relay node, the charging signal parameter may be determined by the following operations: transmitting, by the AP device via the relay node, a query frame to the AMP device, wherein the query frame comprises query information querying whether the AMP device needs charging negotiation and indicates a transmission opportunity (TXOP) allocated by the AP device for the AMP device; transmitting, by the AMP within the TXOP via the relay node, a negotiation request frame carrying feedback indicating a delayed query and a requested charging signal parameter to the AP device, wherein the charging signal parameter further comprises at least one of the following: a delay time and n query intervals, where n is a positive integer greater than or equal to 1; and transmitting, by the AP device via the relay node, a negotiation response frame to the AMP device comprising one of the following: confirmation information comprising: accepting the delayed query, maintaining the periodic basic charging signal to charge the AMP device, and re-transmitting the query frame to the AMP device and re-allocating a TXOP for the AMP device after the delay time or the n query intervals; and rejection information and a TXOP allocated for the AMP device, for the AP device to continue negotiation with the AMP to determine the charging signal parameter.

Exemplarily, the response result comprises response information of one of the following: accepting the modification of the charging signal parameter, to use the modified charging signal parameter as the charging signal parameter; not accepting the modification of the charging signal parameter and transmitting, in the negotiation response frame, the charging signal parameter suggested by the AP and a TXOP allocated for the AMP device to the AMP device to continue negotiating the charging signal parameter; and rejecting the modification of the charging signal parameter, maintaining the periodic basic charging signal to charge the AMP device.

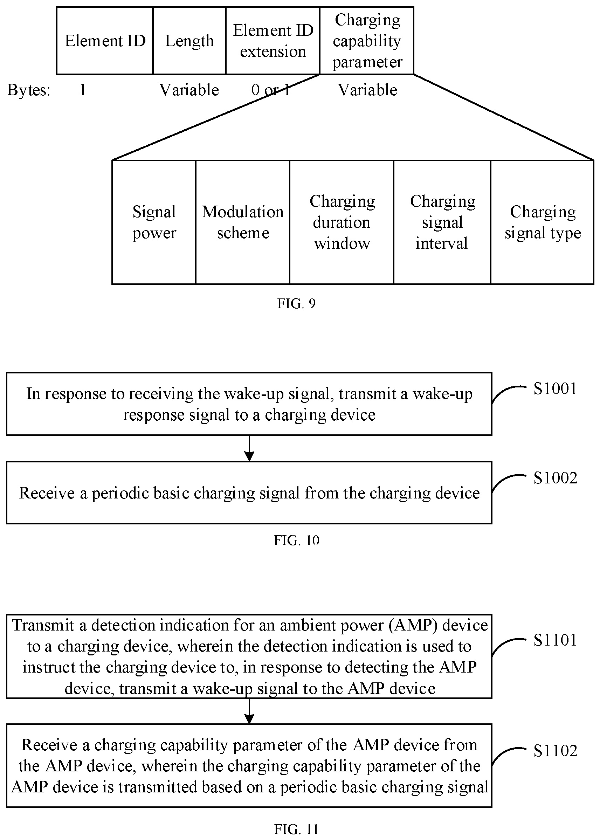

The charging signal parameter may comprise at least one of the following: signal power, modulation scheme, transmission frequency band, whether charging is periodic, a charging duration window, a charging signal interval, a charging duration window offset, and a charging delay. In some embodiments, determining the charging signal parameter comprises: determining a frame for carrying the charging signal parameter; wherein the frame for carrying the charging signal parameter comprises a charging parameter element, the charging parameter element comprises an element ID field and a charging signal parameter field, the element ID field indicating an ID identifier of the element, and the charging signal parameter field representing the charging signal parameter requested by the AMP device or the charging signal parameter suggested by the AP device. Furthermore, the charging parameter element further comprises a length field and an element ID extension field, wherein the length field indicates a length of a remaining field of the charging parameter element other than the element ID field and the length field, the element ID extension field indicates whether the charging parameter element has an extended ID, whether the element ID field and the element ID extension field have a fixed length, and whether the length field and the charging signal parameter field have a variable length. The structure of the frame for carrying the charging signal parameter can be designed as shown in FIG. 9, and the charging parameter element is used to carry the charging signal parameter.

In FIG. 9, for illustrative purposes, the charging signal parameter field shows only signal power, modulation scheme, charging duration window, charging signal interval, and charging signal type. However, the charging signal parameter is not limited thereto and may also comprise other charging signal parameters known in the art.

In some embodiments, the method may further comprise: in response to receiving a new charging parameter or a new charging instruction, adjusting the negotiated charging signal.

In some embodiments, when the auxiliary node is the backscatter reader, electrical energy is provided to the AMP device through a backscatter charging method. In some embodiments, in a scenario of multiple charging links where a plurality of AMP devices are present, the charging device is capable of establishing a respective charging link with each of the plurality of AMP devices to charge said AMP device, and each charging link among the multiple charging links is indicated by a respective link ID identifier among a plurality of link ID identifiers.

Through the above technical solutions of the present disclosure, at least some of the following effects can be achieved: 1) enabling AMP devices to harvest energy in various network architectures; 2) supporting AMP devices to complete authentication and association processes defined by the IEEE 802.11 protocol without a power source and a large-capacity battery, thereby enabling the transmission of various control frames, management frames, and/or data frames; 3) enabling AMP devices and AP devices to negotiate the configuration of charging links, allowing the AP device and the AMP device to complete the definition of charging signal parameters, the configuration of the charging signal, and the management and control of the charging signal; 4) enabling charging and waking up of offline AMP devices to complete their wireless transmission tasks; 5) implementing backhaul communication between the AP device and the charging device when the charging device is not an AP device; and 6) supporting periodic polling of offline AMP devices to allocate charging, access, and communication opportunities for a large number of IoT devices.

FIG. 10 illustrates a flowchart of a method performed by an AMP device for implementing a charging link according to some embodiments of the present disclosure. The order of describing method blocks is not intended to be construed as limiting, and any number of the described method blocks can be skipped or combined in any order to implement the method or an alternative method. Generally, any of the components, modules, methods, and operations described herein can be implemented using software, firmware, hardware (e.g., fixed logic circuits), manual processing, or any combination thereof. Some operations of the example methods can be described in the general context of executable instructions stored on a computer-readable memory local to and/or remote from a computer processing system, and implementations can comprise software applications, programs, functions, etc. Alternatively or additionally, any of the functions described herein can be performed, at least in part, by one or more hardware logic components, such as, but not limited to, field programmable gate arrays (FPGAs), application specific integrated circuits (ASICs), application specific standard products (ASSPs), system on chips (SoCs), complex programmable logic devices (CPLDs), etc. The method of the present disclosure is applicable to any of the network architectures shown in FIGS. 1 to 5 and is described by taking the corresponding network architecture shown in FIGS. 1 to 5 as an example, without limitation.

Referring to FIG. 10, at block 1001, the AMP device may, in response to receiving the wake-up signal, transmit a wake-up response signal to a charging device. The definitions and selections of the AMP device, the charging device, the wake-up signal, and the wake-up response signal can be similar to those involved in the method as described for FIG. 6, and for brevity, specific details are not repeated. The specific implementation of block 1001 may refer to the specific implementation of block 601.

At block 1002, the AMP device receives a periodic basic charging signal from the charging device. The definition and selection of the periodic basic charging signal can be similar to those involved in the method as described for FIG. 6.

According to this technical solution of the present disclosure, waking up the AMP device via the wake-up signal and transmitting the basic charging signal to the AMP device can provide a basic power supply for the AMP device and support the AMP device in executing subsequent operations.

Furthermore, in some embodiments, the AMP device and the AP device can negotiate the configuration of the charging link, and the AP device and the AMP device can complete the definition of charging signal parameters, the configuration of the charging signal, and the management and control of the charging signal. A detailed description is provided below.

In some embodiments, the method may further comprise: transmitting a charging parameter of the AMP device to an access point (AP) device based on the periodic basic charging signal. The AP device may be the AP device 101 described in any of FIGS. 1 to 5. In some examples, the charging parameter of the AMP device may comprise a charging capability parameter of the AMP device, where the definition and selection of the charging capability parameter of the AMP device can be as described for the method in FIG. 6, for example, the structure of the frame for carrying the charging capability parameter of the AMP device may be as shown in FIG. 8.

In some embodiments, the method may further comprise: receiving the charging capability parameter of the charging device from the AP device based on the periodic basic charging signal, where the definition and selection of the charging capability parameter of the charging device can be as described for the method in FIG. 6, for example, the structure of the frame for carrying the charging capability parameter of the charging device may be as shown in FIG. 7.

In some examples, the charging parameter may further comprise a charging signal parameter requested by the AMP device, where the definition and selection of the charging signal parameter can be as described for the method in FIG. 6, for example, the structure of the frame for carrying the charging signal parameter may be as shown in FIG. 9.

In some embodiments, transmitting the charging parameter of the AMP may comprise: transmitting the charging capability parameter of the AMP device to the AP device; and transmitting the charging signal parameter requested by the AMP device to the AP device.

In some embodiments, the method may further comprise: receiving a negotiated charging signal determined based on a charging signal parameter from the charging device, where the determination of the charging signal parameter can be as described for the method in FIG. 6.

In some embodiments, the method may further comprise: receiving a negotiated charging signal determined based on the charging signal parameter from the charging device and receiving a trigger frame from the AP device, and transmitting communication data to the AP device.

In some embodiments, the method may further comprise: receiving an indication message for instructing the AMP device to stop receiving a charging signal and to remain offline or powered off until receiving a next wake-up signal.

FIG. 11 illustrates a flowchart of a method performed by an AP device for implementing a charging link according to some embodiments of the present disclosure. The order of describing method blocks is not intended to be construed as limiting, and any number of the described method blocks can be skipped or combined in any order to implement the method or an alternative method. Generally, any of the components, modules, methods, and operations described herein can be implemented using software, firmware, hardware (e.g., fixed logic circuits), manual processing, or any combination thereof. Some operations of the example methods can be described in the general context of executable instructions stored on a computer-readable memory local to and/or remote from a computer processing system, and implementations can comprise software applications, programs, functions, etc. Alternatively or additionally, any of the functions described herein can be performed, at least in part, by one or more hardware logic components, such as, but not limited to, field programmable gate arrays (FPGAs), application specific integrated circuits (ASICs), application specific standard products (ASSPs), system on chips (SoCs), complex programmable logic devices (CPLDs), etc. The method of the present disclosure is applicable to any of the network architectures shown in FIGS. 1 to 5 and is described by taking the corresponding network architecture shown in FIGS. 1 to 5 as an example, without limitation.

Referring to FIG. 11, at block 1101, the AP device may transmit a detection indication for an ambient power (AMP) device to a charging device, wherein the detection indication is used to instruct the charging device to, in response to detecting the AMP device, transmit a wake-up signal to the AMP device. The definitions and selections of the AP device, the charging device, the AMP device, and the wake-up signal can be similar to those involved in the method as described for FIG. 6, and for brevity, specific details are not repeated. In some implementations, the AP device transmits a detection indication for detecting the AMP device to the charging device; upon receiving the detection indication, the charging device starts detecting the power receiver of the AMP device and, after detecting the power receiver, transmits a wake-up signal to the AMP device; and upon receiving the wake-up signal, the AMP device turns on its power transmitter and transmits a wake-up response signal to the charging device. Subsequently, upon receiving the wake-up response signal, the charging device starts transmitting a periodic basic charging signal to the AMP device to support the normal operation of the power transmitter and power receiver of the AMP device.

At block 1102, the AP device may receive a charging capability parameter of the AMP device from the AMP device, wherein the charging capability parameter of the AMP device is transmitted based on a periodic basic charging signal. The definitions and selections of the periodic basic charging signal and the charging capability parameter of the AMP device can be similar to those involved in the method as described for FIG. 6, and for brevity, specific details are not repeated. For example, the structure of the frame for carrying the charging capability parameter of the AMP device can be as shown in Table 2 above.

In some embodiments, the method may further comprise: transmitting a charging capability parameter of the charging device to the AMP device, where the definition and selection of the charging capability parameter of the charging device can be as described for the method in FIG. 6, for example, the structure of the frame for carrying the charging capability parameter of the charging device may be as shown in FIG. 7.

In some embodiments, the method may further comprise: transmitting a charging signal parameter to the charging device, where the determination of the charging signal parameter can be as described for the method in FIG. 6.

In some embodiments, the method may further comprise: transmitting, to the AMP device, an indication message for instructing the AMP device to stop receiving a charging signal and to remain offline or powered off until receiving a next wake-up signal.

In some embodiments, in a scenario of multiple charging links where a plurality of AMP devices are present, the charging device is capable of establishing a respective charging link with each of the plurality of AMP devices to charge said AMP device, and each charging link among the multiple charging links is indicated by a respective link ID identifier among a plurality of link ID identifiers.

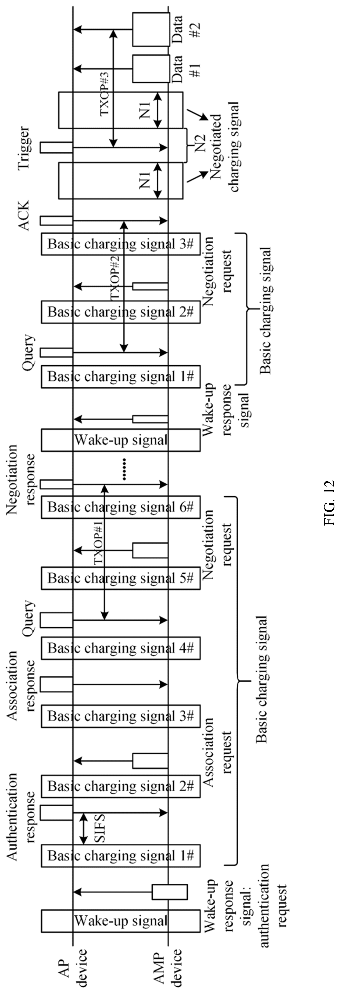

FIG. 12 illustrates a flowchart of time-division transmission of a charging signal and a communication signal in the same frequency band when an AP device serves as a charging device according to some embodiments of the present disclosure. The flowchart of the present disclosure is applicable to the network architecture shown in FIG. 1 and is described using the corresponding network architecture shown in FIG. 1 as an example, without limitation.

Referring to FIG. 12, when the AP device detects the receiver of an AMP device within communication range during a detection period after its transmitter is turned on, the AP device, as a charging device, transmits a wake-up signal to the AMP device. The AMP device then, in response to receiving the wake-up signal, transmits a wake-up response signal to the AP device, where the definitions and selections of the wake-up signal and the wake-up response signal can be as described for the method in FIG. 6, and for brevity, details are not repeated here. Alternatively, when the AMP device contends for a transmission opportunity (TXOP) after receiving the wake-up signal, the AMP device may transmit an authentication request frame to the AP instead of the wake-up response signal.

Then, after receiving the authentication request frame, the AP device starts transmitting a first basic charging signal (e.g., basic charging signal 1#) to the AMP device. The definition and selection of this basic charging signal can be as described for the method in FIG. 6, and for brevity, details are not repeated here. After transmitting the first basic charging signal, the AP device waits for a fixed time interval and then starts transmitting an authentication response frame, where the fixed time interval may be a standard-specified short interframe space (SIFS), pcf interframe space (PIFS), or dcf interframe space (DIFS), etc. The AMP device (e.g., the receiver of the AMP device) can receive the authentication response frame transmitted by the AP device based on the received first basic charging signal.

Subsequently, the AP device may transmit a second basic charging signal (e.g., basic charging signal #2) to the AMP device at the start of the second period of the basic charging signal. And, the AMP device may, based on the second basic charging signal, transmit an association request frame to the AP device when it contends for a transmission opportunity, where the association request frame may carry the charging capability parameter of the AMP device, and the definition and selection of the charging capability parameter of the AMP device can be as described for the method in FIG. 6, and for brevity, details are not repeated here.

After receiving the association request frame from the AMP device, the AP device may transmit a third basic charging signal (e.g., basic charging signal #3) to the AMP device at the start of the third period of the basic charging signal, and after waiting for the above fixed time interval, start transmitting an association response frame, where the association response frame may comprise the charging capability parameter of the AP device and/or the AID or other unique identifier allocated to the AMP device. The AMP device (e.g., the receiver of the AMP device) can receive the association response frame transmitted by the AP device based on the received third basic charging signal. Thus, the AP device and the AMP device can complete the exchange of charging capability through the association request frame and the association response frame.

The AP device may transmit a fourth basic charging signal (e.g., basic charging signal #4) to the AMP device at the start of the fourth period of the basic charging signal, and after waiting for the above fixed time interval, start transmitting a query frame, where the query frame may comprise query information querying whether the AMP device needs charging negotiation and indicates a transmission opportunity (e.g., TXOP#1) allocated by the AP device for the AMP device. The AMP device can receive the query frame based on the fourth basic charging signal.

The AP device may transmit a fifth basic charging signal (e.g., basic charging signal #5) to the AMP device at the start of the fifth period of the basic charging signal. And, the AMP device may, based on the fifth basic charging signal, transmit a negotiation request frame to the AP device within the allocated transmission opportunity (TXOP#1), where the definition and selection of the negotiation request frame can be as described for the method in FIG. 6, and for brevity, details are not repeated here. At this point, if the AP device cannot respond to the AMP device's negotiation request because it needs to perform higher priority communication transmission, the AP device may transmit a sixth basic charging signal (e.g., basic charging signal #6) to the AMP device at the start of the sixth period of the basic charging signal, and after waiting for the fixed time interval, transmit a negotiation response frame to the AMP device, to notify the AMP device that the AP device will stop transmitting the above basic charging signal. The AMP device can receive the negotiation response frame based on the sixth basic charging signal and go offline or power off until receiving the next wake-up signal after the AP device stops transmitting the above basic charging signal. Furthermore, after a certain period of time, the AP device may perform detection of the AMP device's receiver again and, upon detecting the AMP device, transmit a wake-up signal to the AMP device again. Upon receiving the wake-up signal, the AMP device may transmit a wake-up response signal to the AP device, where the wake-up response signal may carry the AID of the AMP device to identify its identity.

Since the AP device and the AMP device have already completed the association process and the authentication process, the AP device may transmit the first basic charging signal to the AMP device and, after waiting for the fixed time interval, directly transmit a query frame to the AMP device without performing the association process and/or authentication process again, where the query frame can be as previously defined and selected for the query frame, for example, the query frame may comprise a transmission opportunity (TXOP#2) allocated by the AP for the AMP device. The AMP device can receive the query frame based on the first basic charging signal.

The AP device may transmit a second basic charging signal (e.g., basic charging signal #2) to the AMP device at the start of the second period of the basic charging signal. The AMP device may, based on the second basic charging signal, transmit a negotiation request frame to the AP device, where the definition and selection of the negotiation request frame can be as described for the method in FIG. 6. The AP device receives and parses the negotiation request frame to learn that the AMP device requests a non-periodic charging signal.

The AP device may transmit a third basic charging signal to the AMP device at the start of the third period of the basic charging signal, and after waiting for the fixed time interval, transmit a confirmation frame (e.g., ACK) to the AMP device, where the confirmation frame notifies the AMP device that the AP agrees to the negotiation for the non-periodic charging signal.

Subsequently, the AP device transmits a non-periodic charging signal to the AMP device, where the non-periodic charging signal has various parameters, such as a charging duration window N1 and a charging signal interval N2. After a certain time interval, the AP device transmits a trigger frame to the AMP device, where the trigger frame comprises a transmission opportunity (TXOP#3) allocated by the AP device for the AMP device, and the AMP device may report specific information, such as data #1 and data #2, to the AP device within the allocated transmission opportunity based on the non-periodic charging signal.

Based on the above solution of the present disclosure, by using the AP device as the charging device, the charging signal and the communication signal can be transmitted in the same frequency band based on a time-division method. The AMP device is discovered and woken up by the wake-up signal. The AP transmits a basic charging signal to support the AMP device in completing subsequent authentication and association processes. The AMP device transmits the requested charging parameters to the AP device via a negotiation request frame, and the AP device responds to the authentication request, association request, and negotiation request in the same frequency band.

Furthermore, through the above solution of the present disclosure, it supports the AP device stopping charging and notifying the AMP device, and also supports the AP device agreeing to the AMP device's negotiation and transmitting the charging signal requested by the AMP device, and the AMP device completes its own data transmission based on the negotiated charging signal.

Therefore, the above solution of the present disclosure can achieve control and management of the charging link for the AMP device, improving its own charging functionality to support the AMP device accessing the WIFI wireless transmission network to implement wireless communication functionality.

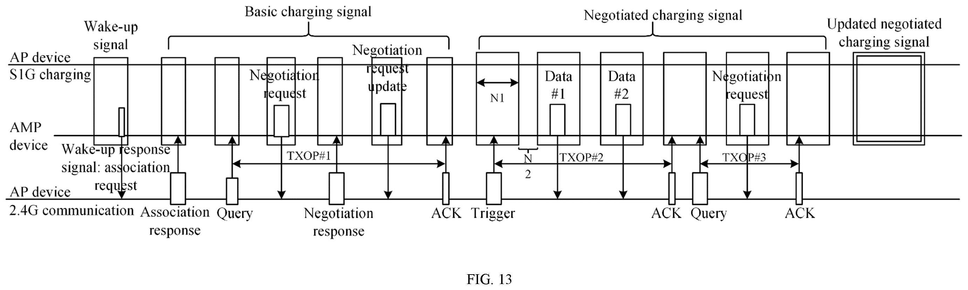

FIG. 13 illustrates a flowchart of frequency-division transmission of a charging signal and a communication signal in different frequency bands when an AP device serves as a charging device according to some embodiments of the present disclosure. The flowchart of the present disclosure is applicable to the network architecture shown in FIG. 1 and is described using the corresponding network architecture shown in FIG. 1 as an example, without limitation.

Referring to FIG. 13, when the AP device detects the receiver of an AMP device within communication range during a detection period after its transmitter is turned on, the AP device, as a charging device, transmits a wake-up signal to the AMP device in the S1G band. The AMP device then, in response to receiving the wake-up signal, transmits a wake-up response signal to the AP device in the 2.4G band, where the definitions and selections of the wake-up signal and the wake-up response signal can be as described for the method in FIG. 6, and for brevity, details are not repeated here. Alternatively, if the AP device and the AMP device have already completed the authentication process in previous communication, when the AMP device contends for a transmission opportunity (TXOP) after receiving the wake-up signal, the AMP device may transmit an association request frame to the AP instead of the wake-up response signal or the authentication request frame, where the association request frame may carry the charging capability parameter of the AMP device, and the definition and selection of the charging capability parameter of the AMP device can be as described for the method in FIG. 6.

Then, after receiving the association request frame, the AP device starts transmitting a basic charging signal to the AMP device in the S1G band and an association response frame to the AMP device in the 2.4G band, where the association response frame may carry the charging capability parameter of the charging device, and the definition and selection of the charging capability parameter of the charging device can be as described for the method in FIG. 6. Thus, the AP device and the AMP device can complete the exchange of charging capability through the association request frame and the association response frame.

After a certain time interval, the AP device may transmit a basic charging signal to the AMP device in the S1G band and a query frame in the 2.4G band, where the query frame may comprise query information querying whether the AMP device needs charging negotiation and indicates a transmission opportunity (e.g., TXOP#1) allocated by the AP device for the AMP device. The AMP device can receive the query frame based on the basic charging signal.

After a certain time interval, the AP device may transmit a basic charging signal to the AMP device in the S1G band. And the AMP device may, based on the basic charging signal, transmit a negotiation request frame to the AP device in the 2.4G band within the allocated transmission opportunity (TXOP#1), where the definition and selection of the negotiation request frame can be as described for the method in FIG. 6, and for brevity, details are not repeated here.

After receiving the negotiation request frame, the AP device may transmit a basic charging signal to the AMP device in the S1G band and a negotiation response frame to the AMP device in the 2.4G band within the allocated transmission opportunity (TXOP#1), where the negotiation response frame comprises a charging signal parameter suggested by the AP device. The AMP device can receive the negotiation response frame based on the basic charging signal, and update the charging negotiation request frame based on the suggested charging signal parameter in the negotiation response frame.

After a certain time interval, the AP device may transmit a basic charging signal to the AMP device in the S1G band. And the AMP device may, based on the basic charging signal, transmit the updated negotiation request frame to the AP device in the 2.4G band within the allocated transmission opportunity (TXOP#1). During the negotiation process involving the negotiation request frame and the negotiation response frame, the request, response, and update of charging signal parameters may be performed multiple times.

After a certain time interval, the AP device agrees to the charging signal parameter requested by the AMP device, and transmits a basic charging signal to the AMP device in the S1G band and a confirmation frame (e.g., ACK) to the AMP device in the 2.4G band, where the confirmation frame notifies the AMP device that the AP agrees to the negotiation for the charging signal parameter.

Subsequently, the AP device transmits the negotiated charging signal to the AMP device, where the negotiated charging signal may be a periodic charging signal with a charging duration window of N1 ms and a charging signal interval of N2 ms. After a certain time interval, the AP device transmits a trigger frame to the AMP device, where the trigger frame comprises a transmission opportunity (TXOP#2) allocated by the AP device for the AMP device, and the AMP device may report specific information, such as data #1 and data #2, to the AP device within the allocated transmission opportunity based on the negotiated charging signal.

Furthermore, after receiving the specific information, the AP device may transmit an ACK to the AMP device.

After a certain time interval, the AP device may re-transmit a query frame to the AMP device and re-allocate a transmission opportunity (TXOP#3) for the AMP device. The AMP device may perform negotiation of charging signal parameters again based on the query frame and transmit a negotiation request frame comprising the requested charging signal parameter to the AP device, where the requested charging signal parameter may be a non-periodic charging signal. After agreeing to the negotiation request, the AP device may update the charging signal to provide a basic power supply for the AMP device and support the AMP device in executing subsequent operations.

Based on the above solution of the present disclosure, by using the AP device as the charging device, the charging signal and the communication signal can be transmitted in different frequency bands based on a frequency-division method. The AMP device is discovered and woken up by the wake-up signal. The AP transmits a basic charging signal to support the AMP device in completing subsequent authentication and association processes. The AMP device and the AP device can complete the exchange of charging capability through the charging capability element in the association request frame and the association response frame. The AMP device and the AP device can complete the negotiation of charging signal parameters through the charging parameter element in the negotiation request frame and the negotiation response frame.

Furthermore, through the above solution of the present disclosure, it supports the negotiation of charging signal parameters between the AP device and the AMP device and the re-updating of the charging signal parameters, and timely transmits the charging signal requested by the AMP device, and the AMP device completes its own data transmission based on the negotiated charging signal.

Therefore, the above solution of the present disclosure can achieve control and management of the charging link for the AMP device, improving its own charging functionality to support the AMP device accessing the WIFI wireless transmission network to implement wireless communication functionality.

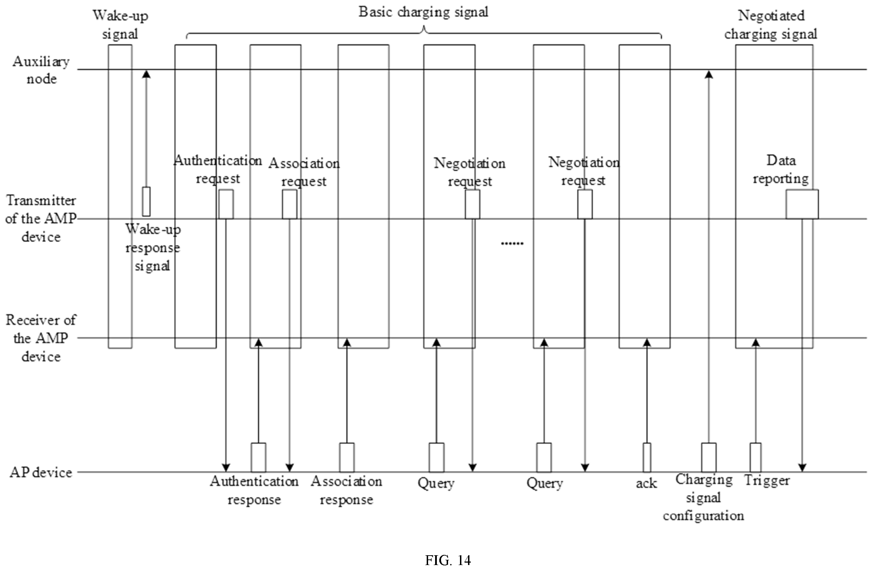

FIG. 14 illustrates a flowchart of transmission of a charging signal and a communication signal when an auxiliary node serves as a charging device according to some embodiments of the present disclosure. The flowchart of the present disclosure is applicable to the network architecture shown in FIG. 2 and is described using the corresponding network architecture shown in FIG. 2 as an example, without limitation.

Referring to FIG. 14, the auxiliary node detects the receiver of an AMP device within communication range during a detection period after its transmitter is turned on or after receiving a detection indication from the AP device. Upon successfully detecting the AMP device, the auxiliary node, as a charging device, transmits a wake-up signal to the AMP device (e.g., the receiver of the AMP device). The AMP device (e.g., the transmitter of the AMP device) then transmits a wake-up response signal to the AP device, where the definitions and selections of the wake-up signal and the wake-up response signal can be as described for the method in FIG. 6, and for brevity, details are not repeated here.

After receiving the wake-up response signal, the auxiliary node starts transmitting a periodic basic charging signal to the AMP device. And the AMP device can rely on this periodic basic charging signal to enable the normal operation of its transmitter and receiver to complete the authentication process and the association process between the AP device and the AMP device. In some implementations, the AMP device, based on the received periodic basic charging signal, transmits an authentication request frame to the AP device, and the AP device may transmit an authentication response frame to the AMP device to complete the authentication process between the AP device and the AMP device. In some implementations, the AMP device, based on the received periodic basic charging signal, transmits an association request frame carrying a charging capability element to the AP device, and the AP device may transmit an association response frame carrying a charging capability element to the AMP device to complete the association process between the AP device and the AMP device. The charging capability parameter of the auxiliary node may be pre-stored in the local memory of the AP device to be obtained by the AP device through local query. Alternatively, if the AP device does not find the charging capability parameter of the auxiliary node locally, the AP device may communicate with the auxiliary node via a communication link to obtain the charging capability parameter of the auxiliary node.

After completing the authentication process and the association process, the AP device may transmit a query frame to the AMP device, where the query frame may comprise query information querying whether the AMP device needs charging negotiation and indicates a transmission opportunity allocated by the AP device for the AMP device. The AMP device may receive the query frame based on the basic charging signal and transmit a negotiation request frame to the AP device, where the negotiation request frame comprises feedback indicating that negotiation of the charging signal is not currently required and requests the AP device to send the query frame again after N ms.

After N ms, the AP device re-transmits the query frame to the AMP device, and the AMP may provide feedback to the query frame via a negotiation request frame, as described for the negotiation request frame in FIG. 6 and/or FIG. 12. For example, the AMP device may carry the requested charging signal parameter in the negotiation request frame, and the AP device may agree to the charging signal parameter requested by the AMP device, and transmit a confirmation frame (e.g., ACK) to the AMP device, where the confirmation frame notifies the AMP device that the AP agrees to the negotiation for the charging signal parameter. Simultaneously, the AP device also sends the negotiated charging signal parameter to the auxiliary node to instruct the auxiliary node to modify its charging signal. Upon receiving the above charging signal parameter, the auxiliary node modifies the charging signal to the negotiated charging signal.

Subsequently, the auxiliary node transmits the negotiated charging signal to the AMP device. The AP device transmits a trigger frame to the AMP device, where the trigger frame comprises a transmission opportunity allocated by the AP device for the AMP device, and the AMP device may report specific information, such as data, to the AP device within the allocated transmission opportunity based on the negotiated charging signal.

Based on the above solution of the present disclosure, an auxiliary node can be used as a charging device. The AMP device is discovered and woken up by the wake-up signal. The auxiliary node transmits a periodic basic charging signal to support the AP device and the AMP device in completing subsequent authentication and association processes. The AMP device and the AP device can complete the negotiation of charging signal parameters through the charging parameter element in the negotiation request frame and the negotiation response frame, and send the negotiated charging signal parameter to the auxiliary node to achieve control and management of the charging link of the auxiliary node.

Furthermore, through the above solution of the present disclosure, it supports the negotiation of charging signal parameters between the AP device and the AMP device and the transmission of the negotiated charging signal parameters to the auxiliary node, and the AMP device completes its own data transmission based on the negotiated charging signal.

Therefore, the above solution of the present disclosure can achieve control and management of the charging link for the AMP device, improving its own charging functionality to support the AMP device accessing the WIFI wireless transmission network to implement wireless communication functionality.

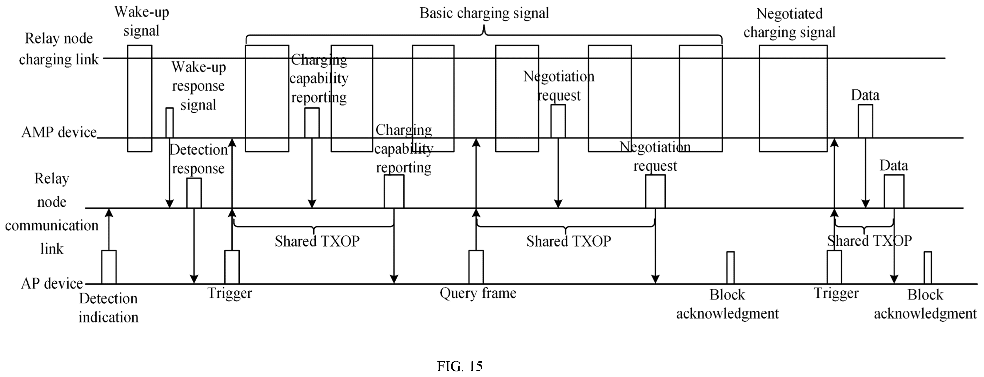

FIG. 15 illustrates a flowchart of transmission of a charging signal and a communication signal when a relay node serves as a charging device according to some embodiments of the present disclosure. The flowchart of the present disclosure is applicable to the network architecture shown in FIG. 3 and is described using the corresponding network architecture shown in FIG. 3 as an example, without limitation.

Referring to FIG. 15, the AP device transmits a detection indication to the relay node to instruct the relay node to detect the receiver of an AMP device within communication range during a detection period. Upon successfully detecting the AMP device, the relay node, as a charging device, transmits a wake-up signal to the AMP device. The AMP device then transmits a wake-up response signal to the AP device, where the definitions and selections of the wake-up signal and the wake-up response signal can be as described for the method in FIG. 6, and for brevity, details are not repeated here.

After receiving the wake-up response signal, the relay node reports a detection response to the AP device to notify the AP device that the AMP device has been detected and woken up, and starts transmitting a periodic basic charging signal to the AMP device. The AMP device can rely on this periodic basic charging signal to enable the normal operation of its transmitter and receiver. Upon receiving the detection response, the AP device transmits a trigger frame to the relay node to allocate a transmission opportunity (TXOP) to the relay node, where the relay node and the AMP device can share this transmission opportunity to support the reporting of the charging capability parameter and the charging signal parameter of the AMP device. In some implementations, the AMP device, based on the received periodic basic charging signal, reports the charging capability parameter of the AMP device to the AP device via the relay node. The charging capability parameter of the relay node and the charging capability parameter of the AMP device may be reported together to the AP device via an aggregated frame or may be reported separately to the AP device via different frames. The definitions and selections of the charging capability parameter of the relay node and the charging capability parameter of the AMP device can be as described for the method in FIG. 6, and for brevity, details are not repeated here.

After receiving the charging capability parameter of the relay node and the charging capability parameter of the AMP device, the AP device may transmit a query frame to the AMP device via the relay node, where the query frame may comprise query information querying whether the AMP device needs charging negotiation and indicates a transmission opportunity (TXOP) allocated by the AP device for the AMP device. The AMP device may receive the query frame based on the received basic charging signal and transmit a negotiation request frame to the AP device via the relay node, as described for the negotiation request frame in FIG. 6 and/or FIG. 12. For example, the AMP device may carry the requested charging signal parameter in the negotiation request frame, and the AP device may agree to the charging signal parameter requested by the AMP device, and transmit a confirmation frame (e.g., ACK) to the AMP device via the relay node, where the confirmation frame notifies the AMP device that the AP agrees to the negotiation for the charging signal parameter. Simultaneously, upon receiving the confirmation frame, the relay node modifies its charging signal to the negotiated charging signal. Based on the negotiated charging signal transmitted by the relay node, the AMP device receives the trigger frame transmitted by the AP device via the relay node and reports data to the AP device via the relay node according to the TXOP allocated by the AP device. The AP device may perform block acknowledgment.

Based on the above solution of the present disclosure, a relay node can be used as a charging device. The AP device can instruct the relay node to discover and wake up the AMP device via a wake-up signal. The relay node transmits a periodic basic charging signal to the AMP device and reports the charging capability parameter of the AMP device to the AP device to assist the AP device in making decisions or providing feedback during subsequent negotiation processes, where the reporting of the above charging capability can be performed via an aggregated frame or different frames. The AMP device negotiates charging signal parameters with the AP device via the relay node, and the transmission of charging signal parameters can be accomplished via the charging parameter element in the negotiation request frame and the negotiation response frame. Since the entire negotiation process goes through the relay node, after the negotiation is completed, the relay node can perform the transmission of the negotiated charging signal based on the negotiated charging signal parameters. The AP device can achieve control and management of the charging link of the relay node.

Furthermore, through the above solution of the present disclosure, it supports the relay node charging the AMP device and assisting the AMP device in communicating with the AP device. The charging link and the communication link may be performed in the same frequency band using a time-division method or in different frequency bands using a frequency-division method. The AMP device completes its own data transmission based on the negotiated charging signal transmitted by the relay node.

Therefore, the above solution of the present disclosure can achieve control and management of the charging link for the AMP device, improving its own charging functionality to support the AMP device accessing the WIFI wireless transmission network to implement wireless communication functionality.

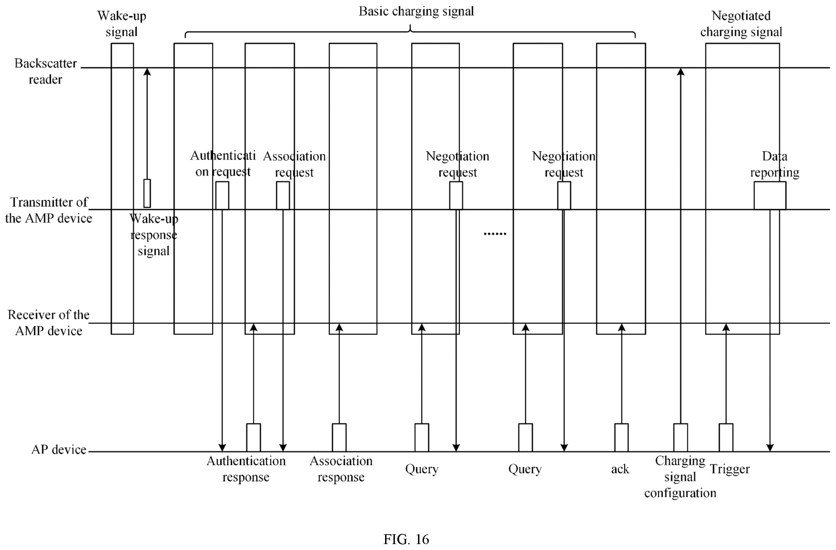

FIG. 16 illustrates a flowchart of transmission of a charging signal and a communication signal when a backscatter reader serves as a charging device according to some embodiments of the present disclosure. The flowchart of the present disclosure is applicable to the network architecture shown in FIG. 4 and is described using the corresponding network architecture shown in FIG. 4 as an example, without limitation.

Referring to FIG. 16, the transmission process of the charging signal and the communication signal in this technical solution of the present disclosure is substantially the same as the transmission process of the technical solution shown in FIG. 14, so its details are not repeated. The difference between this technical solution and the technical solution shown in FIG. 14 is that before each communication with the AMP device, the AP device needs to notify the backscatter reader to approach the AMP device to provide the charging signal for the AMP device, thereby ensuring the normal operation of the transmitter and/or receiver of the AMP device. Furthermore, whenever the backscatter reader needs to move, the reader needs to communicate with the AP device to report to the AP device that the AMP device is no longer within its charging range and therefore has no communication capability. Under such limitations, the AMP device cannot initiate communication with the AP device actively; all communication is initiated by the AP device, which instructs the backscatter reader to power the AMP device. After the AMP device comes online, it can negotiate charging signal parameters with the AP device through the above transmission process of the charging signal and the communication signal. After completing the negotiation of the charging signal parameters, the AP device can notify the backscatter reader to change and store the negotiated charging signal parameters. During this period, the backscatter reader may move, and after starting charging again, it can charge the AMP device according to the stored negotiated charging signal until the AP device gives a new instruction for the charging signal parameters.

Based on the above solution of the present disclosure, a backscatter reader can be used as a charging device and charge the AMP device via a backscatter method. The AMP device and the AP device can complete the negotiation of charging signal parameters through the charging parameter element in the negotiation request frame and the negotiation response frame, and the AP device sends the negotiated charging signal parameters to the backscatter reader to achieve control and management of the charging signal of the backscatter reader. Before the AP device communicates with the AMP device, it communicates with the backscatter reader to instruct it to approach the AMP device to be charged, ensuring that the AMP device receives the charging signal to enable the operation of the AMP device's transmitter or receiver to complete data transmission.

Furthermore, due to the specific nature of backscatter charging of the backscatter reader, the backscatter reader and the AMP device must remain within a relatively small range to ensure charging. When the backscatter reader moves, it needs to report to the AP device to notify the AP device that the AMP device is currently out of the chargeable range and cannot support data communication, avoiding the AP device wasting transmission resources.

According to the above solution of the present disclosure, the backscatter reader stores the charging parameters negotiated between the AP device and the AMP device, ensuring that each contact with the AMP device can transmit a charging signal that meets the AMP device's requirements. It will update and store the relevant parameters of the charging link only upon receiving a new instruction from the AP device.

Therefore, the above solution of the present disclosure can achieve control and management of the charging link for the AMP device, improving its own charging functionality to support the AMP device accessing the WIFI wireless transmission network to implement wireless communication functionality.

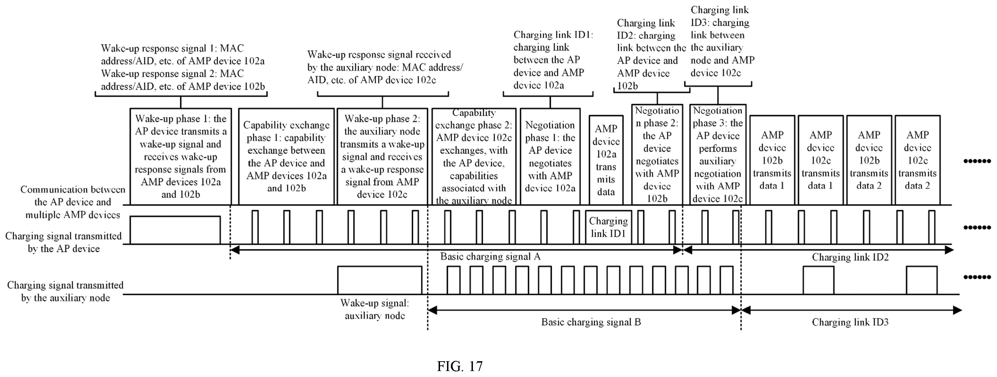

FIG. 17 illustrates a flowchart of transmission of a charging signal and a communication signal in the case of multiple charging links according to some embodiments of the present disclosure.

The flowchart of the present disclosure is applicable to the network architecture shown in FIG. 5 and is described using the corresponding network architecture shown in FIG. 5 as an example, without limitation.

Referring to FIG. 17, the AP device detects AMP devices 102a and 102b within its charging range and transmits wake-up signals to AMP devices 102a and 102b. AMP devices 102a and 102b transmit wake-up response signals to the AP device, for example, a wake-up signal for AMP device 102a (comprising the MAC address/AID of AMP device 102a, etc.) and a wake-up signal for AMP device 102b (comprising the MAC address/AID of AMP device 102b, etc.).

After receiving the wake-up response signals, the AP device transmits periodic basic charging signals A to AMP devices 102a and 102b respectively to support the normal operation of the transmitters and receivers of AMP devices 102a and 102b. Thereby, the exchange of charging capability parameters between the AMP device 102a and the AP device, and between AMP device 102b and the AP device may be completed through the authentication process and/or association process between the AMP device 102a and the AP device, and between the AMP device 102b and the AP device, respectively, as described in the exchange process of charging capability parameters in FIGS. 12 and 13. For brevity, details are not repeated here. During this period, the auxiliary node detects AMP device 102c existing within its charging range and transmits a wake-up signal to that AMP device 102c. AMP device 102c, in response to receiving the wake-up signal, transmits a wake-up response signal to the auxiliary node. After receiving the wake-up response signal, the auxiliary node starts transmitting a periodic basic charging signal B to AMP device 102c to support AMP device 102c in transmitting its charging capability parameter to the AP device and receiving the charging capability parameter of the auxiliary node sent by the AP device, thereby completing the exchange of charging capability parameters between the auxiliary node and AMP device 102c, as described in the exchange process of charging capability parameters in FIG. 14. For brevity, details are not repeated here.

In this embodiment, the definitions and selections of basic charging signal A and basic charging signal B can be similar to those described in the method of FIG. 6, where the charging window of basic charging signal A is smaller than that of basic charging signal B, and the charging interval of basic charging signal A is larger than that of basic charging signal B.

The AP device may transmit a query frame to AMP device 102a and allocate a transmission opportunity (TXOP) for it to respond to the query frame. AMP device 102a may transmit a negotiation request frame to the AP device within the allocated transmission opportunity, comprising a request for a non-periodic basic charging signal, where the definition and selection of the negotiation request frame can be similar to those described in the method of FIG. 6. The AP agrees to the request of AMP device 102a, allocates a charging link ID1 for it, and transmits the negotiated charging signal to AMP device 102a. AMP device 102a may report data to the AP device based on the negotiated charging signal. Since the charging signal is non-periodic, AMP device 102a may remain offline after completing the data reporting and receiving the ACK from the AP device until receiving the next wake-up signal.

Furthermore, the AP device may transmit a query frame to AMP device 102b and allocate a transmission opportunity (TXOP) for it to respond to the query frame. AMP device 102b may transmit a negotiation request frame to the AP device within the allocated transmission opportunity, comprising feedback requesting the AP device to maintain the current basic charging signal A, where the definition and selection of the negotiation request frame can be similar to those described in the method of FIG. 6. The AP agrees to the request of AMP device 102b, allocates a charging link ID2 for it, and continues transmitting basic charging signal A to AMP device 102b to support periodic data transmission of AMP device 102b until the following occurs:
- The AP device queries AMP device 102b next time, obtains newly negotiated charging signal parameters, and updates the parameters of charging link ID2;
- The AP device decides to modify the parameters of the current charging link and notifies AMP device 102b of the new parameters of charging link ID2; or
- The AP device decides to stop transmitting the charging signal and notifies AMP device 102b to discard charging link ID2, causing AMP device 102b to go offline until receiving the next wake-up signal.

Furthermore, the AP device may transmit a query frame to AMP device 102c and allocate a transmission opportunity (TXOP) for it to respond to the query frame. AMP device 102c may transmit a negotiation request frame to the AP device within the allocated transmission opportunity, comprising a request for the auxiliary node to send a periodic charging signal, where the definition and selection of the negotiation request frame can be similar to those described in the method of FIG. 6. The AP agrees to the request of AMP device 102c, allocates a charging link ID3 for it, notifies the auxiliary node to adjust its charging signal, and sends the negotiated charging signal parameters to the auxiliary node. The auxiliary node transmits the negotiated charging signal to AMP device 102c according to the negotiated charging signal parameters, and AMP device 102c may complete periodic data transmission based on the negotiated charging signal until the following occurs:
- The AP device queries AMP device 102c next time, obtains newly negotiated charging signal parameters, and updates the parameters of charging link ID3;
- The AP device decides to modify the parameters of the current charging link and notifies AMP device 102c of the new parameters of charging link ID3; or
- The AP device decides to stop transmitting the charging signal and notifies AMP device 102c to discard charging link ID3, causing AMP device 102c to go offline until receiving the next wake-up signal.

Based on the above solution of the present disclosure, in a network topology with multiple charging links, the AP device manages and controls all charging links uniformly through charging link IDs. The establishment of each charging link may comprise one or several of the following phases: a wake-up phase, a capability exchange phase, a parameter negotiation phase, and a charging transmission phase. After completing the parameter negotiation, the AP device allocates a charging link ID. The charging link ID corresponds to its unique charging signal parameters. The AP allocates TXOPs to multiple AMP devices through polling, enabling the AMP devices to negotiate charging signals based on the allocated transmission opportunities. When the charging link signal changes, the AP device can notify the corresponding AMP device via the charging link ID of the real-time change of its charging link, where the change may comprise parameter adjustment, re-negotiation, stopping charging, link discarding, etc. Through the management and control of multiple charging links, multiple AMP devices can negotiate the parameters of their charging links to achieve their transmission tasks.

Therefore, the above solution of the present disclosure can achieve control and management of multiple charging links for multiple AMP devices, improving their own charging functionality to support the AMP devices accessing the WIFI wireless transmission network to implement wireless communication functionality.

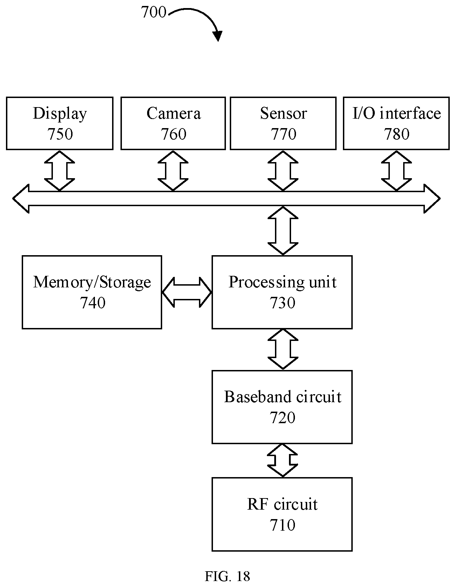

FIG. 18 is a block diagram of an example system 700 for wireless communication according to an embodiment of the present disclosure. Any suitably configured hardware and/or software may be used to implement the embodiments described herein into the system. FIG. 18 illustrates a system 700 comprising Radio Frequency (RF) circuitry 710, baseband circuitry 720, a processing unit 730, memory/storage 740, a display 750, a camera 760, a sensor 770, and an Input/Output (I/O) interface 780, coupled as shown.

The processing unit 730 may comprise circuitry such as, but not limited to, one or more single-core or multi-core processors. The processor may comprise any combination of general-purpose processors and dedicated processors, such as graphics processors and application processors. The processor may be coupled with the memory/storage and configured to execute instructions stored in the memory/storage to enable various applications and/or operating systems running on the system. The RF circuitry 710, baseband circuitry 720, processing unit 730, memory/storage 740, display 750, camera 760, sensor 770, and I/O interface 780 are well-known elements in the system 700, such as, but not limited to, laptop computing devices, tablet computing devices, netbooks, ultrabooks, smartphones, etc. Furthermore, instructions as a software product may be stored in a computer-readable storage medium. The software product in the computer is stored in a storage medium, comprising commands for a computing device (such as a personal computer, server, or network device) to execute all or some steps disclosed in the embodiments of the present disclosure. The storage medium comprises a USB disk, a removable hard disk, read only memory (ROM), Random Access Memory (RAM), a floppy disk, or other types of media capable of storing program code.

Embodiments of the present disclosure are a combination of "techniques/processes" that can be adopted in 3GPP specifications to create an end product.

Unless expressly stated to the contrary, the above embodiments/examples/implementations may be combined with any other one or more embodiments/examples/implementations.

Embodiments of the present disclosure further provide a charging device, which may comprise a processor configured to execute the methods disclosed in the above embodiments.

Embodiments of the present disclosure further provide an ambient power (AMP) device, which may comprise a processor configured to execute the methods disclosed in the above embodiments.

Embodiments of the present disclosure further provide an access point (AP) device, which may comprise a processor configured to execute the methods disclosed in the above embodiments.

Embodiments of the present disclosure further provide a chip, which may comprise a processor configured to call and run a computer program stored in a memory, to cause a device in which the chip is installed to execute the methods disclosed in the above embodiments.

Embodiments of the present disclosure further provide a computer-readable storage medium having a computer program stored therein. The computer program causes a computer to execute the methods disclosed in the above embodiments.

Embodiments of the present disclosure further provide a computer program product having a computer program stored therein. The computer program causes a computer to execute the methods disclosed in the above embodiments.

Embodiments of the present disclosure further provide a computer program that causes a computer to execute the methods disclosed in the above embodiments.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A method for implementing a charging link performed by a charging device, comprising:
in response to detecting an ambient power (AMP) device, transmitting a wake-up signal to the AMP device; and
in response to receiving a wake-up response signal from the AMP device, transmitting a periodic basic charging signal to the AMP device.

2. The method according to claim 1, further comprising: providing a charging capability parameter of the charging device.

3. The method according to claim 2, wherein the charging device is one of an access point (AP) device, an auxiliary node, a relay node, and a backscatter reader.

4. The method according to claim 3, wherein the charging device is the AP device or the relay node, and the providing the charging capability parameter of the charging device comprises:
directly transmitting the charging capability parameter of the charging device to the AMP device.

5. The method according to claim 3, wherein the charging device is the auxiliary node or the backscatter reader, and the providing the charging capability parameter of the charging device comprises:
transmitting the charging capability parameter of the charging device to the AMP device via the AP device.

6. The method according to any one of claims 2 to 5, wherein the charging capability parameter comprises at least one of the following:
a Sub-1GHz (S1G) support parameter, a maximum transmission power, a maximum transmission distance, a maximum number of transmitting antennas, a transmitting antenna identifier, and a maximum number of supported charging sessions or links.

7. The method according to any one of claims 2 to 6, wherein:
the providing the charging capability parameter of the charging device comprises: providing a frame for carrying the charging capability parameter;
wherein the frame for carrying the charging capability parameter comprises a charging capability element, the charging capability element comprises an element ID field and a charging capability parameter field, wherein the element ID field indicates an ID identifier of the charging capability element, and the charging capability parameter field indicates the charging capability parameter of the charging device.

8. The method according to claim 7, wherein the charging capability element further comprises a length field and an element ID extension field;
wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length.

9. The method according to claim 4, further comprising:
receiving a charging capability parameter of the AMP device.

10. The method according to claim 9, wherein the charging capability parameter of the AMP device comprises at least one of the following:
an S1G support parameter, a maximum reception power, a maximum transmission distance, a maximum number of receiving antennas, a receiving antenna identifier, and a maximum number of supported charging sessions or links.

11. The method according to claim 9 or 10, wherein the receiving the charging capability parameter of the AMP device comprises: receiving a frame for carrying the charging capability parameter of the AMP device;
wherein the frame for carrying the charging capability parameter of the AMP device comprises a charging capability element, the charging capability element comprises an element ID field and a charging capability parameter field, wherein the element ID field indicates an ID identifier of the charging capability element, and the charging capability parameter field indicates the charging capability parameter of the AMP device.

12. The method according to claim 11, wherein the charging capability element for carrying the charging capability parameter of the AMP device further comprises a length field and an element ID extension field;
wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length.

13. The method according to claim 3, further comprising:
transmitting a negotiated charging signal determined based on a charging signal parameter to the AMP device, wherein the charging signal parameter is determined based on a negotiation between the AP device and the AMP device.

14. The method according to claim 13, wherein the charging device is the AP device, and determining the charging signal parameter comprises:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a query response frame carrying feedback indicating that negotiation is not required from the AMP device;
transmitting a confirmation frame indicating that negotiation is not required to the AMP device; and
maintaining, based on the confirmation frame, the periodic basic charging signal to charge the AMP device.

15. The method according to claim 13, wherein the charging device is the AP device, and determining the charging signal parameter comprises:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a negotiation request frame carrying a charging signal parameter requested by the AMP device and/or a feedback result from the AMP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
transmitting, to the AMP device, a negotiation response frame comprising a charging signal parameter suggested by the AP device and/or a response result; and
determining the charging signal parameter based on the negotiation request frame and the negotiation response frame.

16. The method according to claim 13, wherein the charging device is the AP device, and determining the charging signal parameter comprises:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a negotiation request frame carrying feedback indicating a delayed query and a requested charging signal parameter from the AMP device, wherein the charging signal parameter further comprises at least one of the following: a delay time and n query intervals, where n is a positive integer greater than or equal to 1; and
transmitting, to the AMP device, a negotiation response frame comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

17. The method according to claim 13, wherein the charging device is the relay node, and determining the charging signal parameter comprises:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a query response frame carrying feedback indicating that negotiation is not required from the AMP device;
transmitting a confirmation frame indicating that negotiation is not required to the relay node; and
maintaining, by the relay node based on the confirmation frame, the periodic basic charging signal to charge the AMP device.

18. The method according to claim 13, wherein the charging device is the relay node, and determining the charging signal parameter comprises:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a negotiation request frame carrying a charging signal parameter requested by the AMP device and/or a feedback result from the AMP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
transmitting, via the relay node, a negotiation response frame comprising a charging signal parameter suggested by the AP device and/or a response result to the AMP device;
determining the charging signal parameter based on the negotiation request frame and the negotiation response frame; and
transmitting a confirmation frame carrying the charging signal parameter to the relay node.

19. The method according to claim 13, wherein the charging device is the relay node, and determining the charging signal parameter comprises:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a negotiation request frame carrying feedback indicating a delayed query and a requested charging signal parameter from the AMP, wherein the charging signal parameter further comprises at least one of the following: a delay time and n query intervals, where n is a positive integer greater than or equal to 1; and
transmitting, via the relay node, a negotiation response frame to the AMP device comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

20. The method according to claim 15 or 18, wherein the response result comprises response information of one of the following:
accepting the modification of the charging signal parameter, to use the modified charging signal parameter as the charging signal parameter;
not accepting the modification of the charging signal parameter and transmitting, in the negotiation response frame, the charging signal parameter suggested by the AP and a TXOP allocated for the AMP device to the AMP device to continue negotiating the charging signal parameter; and
rejecting the modification of the charging signal parameter, maintaining the periodic basic charging signal to charge the AMP device.

21. The method according to claim 13, wherein the charging device is the auxiliary node or the backscatter reader, the method further comprising:
receiving a charging signal parameter determined based on a negotiation between the AMP device and the AP device; and
transmitting a negotiated charging signal determined based on the charging signal parameter to the AMP device.

22. The method according to any one of claims 13 to 21, wherein the charging signal parameter comprises at least one of the following: signal power, modulation scheme, transmission frequency band, whether charging is periodic, a charging duration window, a charging signal interval, a charging duration window offset, and a charging delay.

23. The method according to any one of claims 13 to 22, wherein determining the charging signal parameter comprises: determining a frame for carrying the charging signal parameter;
wherein the frame for carrying the charging signal parameter comprises a charging parameter element, the charging parameter element comprises an element ID field and a charging signal parameter field, the element ID field indicating an ID identifier of the element, and the charging signal parameter field representing the charging signal parameter requested by the AMP device or the charging signal parameter suggested by the AP device.

24. The method according to claim 23, wherein the charging parameter element further comprises a length field and an element ID extension field;
wherein the length field indicates a length of a remaining field of the charging parameter element other than the element ID field and the length field, the element ID extension field indicates whether the charging parameter element has an extended ID, whether the element ID field and the element ID extension field have a fixed length, and whether the length field and the charging signal parameter field have a variable length.

25. The method according to any one of claims 13 to 24, further comprising: in response to receiving a new charging parameter or a new charging instruction, adjusting the negotiated charging signal.

26. The method according to claim 3, wherein when the auxiliary node is the backscatter reader, electrical energy is provided to the AMP device through a backscatter charging method.

27. The method according to any one of claims 1 to 26, wherein in a scenario of multiple charging links where a plurality of AMP devices are present, the charging device is capable of establishing a respective charging link with each of the plurality of AMP devices to charge said AMP device, and each charging link among the multiple charging links is indicated by a respective link ID identifier among a plurality of link ID identifiers.

28. The method according to any one of claims 1 to 27, wherein each of the periodic basic charging signals comprises at least one of the following parameters: a transmission power of the charging device, a basic signal power, a modulation scheme, a transmission frequency band, an identifier of the charging device, a charging duration window, a charging duration window offset, and a charging signal interval.

29. A method performed by an ambient power (AMP) device for implementing a charging link, comprising:
in response to receiving a wake-up signal, transmitting a wake-up response signal to a charging device; and
receiving a periodic basic charging signal from the charging device.

30. The method according to claim 29, further comprising:
transmitting a charging parameter of the AMP device to an access point (AP) device based on the periodic basic charging signal.

31. The method according to claim 30, wherein the charging parameter comprises a charging capability parameter of the AMP device.

32. The method according to claim 31, wherein the charging capability parameter comprises at least one of the following:
a Sub-1GHz (S1G) support parameter, a maximum reception power, a maximum transmission distance, a maximum number of receiving antennas, a receiving antenna identifier, and a maximum number of supported charging sessions or links.

33. The method according to claim 31 or 32, wherein transmitting the charging parameter comprises: transmitting a frame for carrying the charging capability parameter;
wherein the frame for carrying the charging capability parameter comprises a charging capability element, the charging capability element comprises an element ID field and a charging capability parameter field, wherein the element ID field indicates an ID identifier of the charging capability element, and the charging capability parameter field indicates the charging capability parameter of the AMP device.

34. The method according to claim 33, wherein the charging capability element further comprises a length field and an element ID extension field;
wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length.

35. The method according to claim 30, further comprising: receiving a charging capability parameter of the charging device from the AP device based on the periodic basic charging signal.

36. The method according to claim 35, wherein the charging capability parameter comprises at least one of the following:
an S1G support parameter, a maximum transmission power, a maximum transmission distance, a maximum number of transmitting antennas, a transmitting antenna identifier, and a maximum number of supported charging sessions or links.

37. The method according to claim 35 or 36, wherein receiving the charging capability parameter comprises receiving a frame for carrying the charging capability parameter;
wherein the frame for carrying the charging capability parameter comprises a charging capability element, the charging capability element comprises an element ID field and a charging capability parameter field, wherein the element ID field indicates an ID identifier of the charging capability element, and the charging capability parameter field indicates the charging capability parameter of the charging device.

38. The method according to claim 37, wherein the charging capability element further comprises a length field and an element ID extension field;
wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length.

39. The method according to claim 30, wherein the charging device is one of an AP device, an auxiliary node, and a relay node.

40. The method according to claim 30, wherein the charging parameter comprises a charging signal parameter requested by the AMP device.

41. The method according to claim 40, wherein the charging signal parameter comprises at least one of the following: signal power, modulation scheme, transmission frequency band, whether charging is periodic, a charging duration window, a charging signal interval, a charging duration window offset, and a charging delay.

42. The method according to claim 40 or 41, wherein transmitting the charging parameter comprises: transmitting a frame for carrying the charging signal parameter;
wherein the frame for carrying the charging signal parameter comprises a charging parameter element, the charging parameter element comprises an element ID field and a charging signal parameter field, the element ID field indicating an ID identifier of the element, and the charging signal parameter field representing the charging signal parameter requested by the AMP device.

43. The method according to claim 42, wherein the charging parameter element further comprises a length field and an element ID extension field;
wherein the length field indicates a length of a remaining field of the charging parameter element other than the element ID field and the length field, the element ID extension field indicates whether the charging parameter element has an extended ID, whether the element ID field and the element ID extension field have a fixed length, and whether the length field and the charging signal parameter field have a variable length.

44. The method according to any one of claims 30 to 43, wherein the transmitting the charging parameter of the AMP comprises:
transmitting the charging capability parameter of the AMP device to the AP device; and
transmitting the charging signal parameter requested by the AMP device to the AP device.

45. The method according to claim 44, further comprising: receiving a negotiated charging signal determined based on a charging signal parameter from the charging device, wherein the charging signal parameter is determined based on a negotiation between the AP device and the AMP device.

46. The method according to claim 45, wherein the charging device is the AP device, and determining the charging signal parameter comprises:
receiving a query frame from the AP device, wherein the query frame comprises query information querying whether the AMP device needs charging negotiation and indicates a transmission opportunity (TXOP) allocated by the AP device for the AMP device;
transmitting, within the TXOP, a query response frame carrying feedback indicating that negotiation is not required to the AP device;
receiving a confirmation frame indicating that negotiation is not required from the AP device; and
maintaining, based on the confirmation frame, the periodic basic charging signal to charge the AMP device.

47. The method according to claim 45, wherein the charging device is the AP device, and determining the charging signal parameter comprises:
receiving a query frame from the AP device, wherein the query frame comprises query information querying whether the AMP device needs charging negotiation and indicates a transmission opportunity (TXOP) allocated by the AP device for the AMP device;
transmitting, within the TXOP, a negotiation request frame carrying a charging signal parameter requested by the AMP device and/or a feedback result to the AP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
receiving, from the AP device, a negotiation response frame comprising a charging signal parameter suggested by the AP device and/or a response result; and
determining the charging signal parameter based on the negotiation request frame and the negotiation response frame.

48. The method according to claim 45, wherein the charging device is the AP device, and determining the charging signal parameter comprises:
receiving a query frame from the AP device, wherein the query frame comprises query information querying whether the AMP device needs charging negotiation and indicates a transmission opportunity (TXOP) allocated by the AP device for the AMP device;
transmitting, within the TXOP, a negotiation request frame carrying feedback indicating a delayed query and a requested charging signal parameter to the AP device, wherein the charging signal parameter further comprises at least one of the following: a delay time and n query intervals, where n is a positive integer greater than or equal to 1; and
receiving, from the AP device, a negotiation response frame comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

49. The method according to claim 45, wherein the charging device is the relay node, and determining the charging signal parameter comprises:
receiving, via the relay node, a query frame from the AP device, wherein the query frame comprises query information querying whether the AMP device needs charging negotiation and indicates a transmission opportunity (TXOP) allocated by the AP device for the AMP device;
transmitting, via the relay node within the TXOP, a query response frame carrying feedback indicating that negotiation is not required to the AP device;
transmitting, by the AP device, a confirmation frame indicating that negotiation is not required to the relay node; and
maintaining, by the relay node based on the confirmation frame, the periodic basic charging signal to charge the AMP device.

50. The method according to claim 45, wherein the charging device is the relay node, and determining the charging signal parameter comprises:
receiving, via the relay node, a query frame from the AP device, wherein the query frame comprises query information querying whether the AMP device needs charging negotiation and indicates a transmission opportunity (TXOP) allocated by the AP device for the AMP device;
transmitting, via the relay node within the TXOP, a negotiation request frame carrying a charging signal parameter requested by the AMP device and/or a feedback result to the AP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
receiving, via the relay node, a negotiation response frame comprising a charging signal parameter suggested by the AP device and/or a response result from the AP device;
determining, by the AP device, the charging signal parameter based on the negotiation request frame and the negotiation response frame; and
transmitting, by the AP device, a confirmation frame carrying the charging signal parameter to the relay node.

51. The method according to claim 45, wherein the charging device is the relay node, and determining the charging signal parameter comprises:
receiving, via the relay node, a query frame from the AP device, wherein the query frame comprises query information querying whether the AMP device needs charging negotiation and indicates a transmission opportunity (TXOP) allocated by the AP device for the AMP device;
transmitting, via the relay node within the TXOP, a negotiation request frame carrying feedback indicating a delayed query and a requested charging signal parameter to the AP device, wherein the charging signal parameter further comprises at least one of the following: a delay time and n query intervals, where n is a positive integer greater than or equal to 1; and
receiving, via the relay node, a negotiation response frame from the AP device comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

52. The method according to claim 45, wherein the charging device is the auxiliary node or the backscatter reader, and the charging signal parameter is determined based on a negotiation between the AP device and the AMP device.

53. The method according to claim 47 or 50, wherein the response result comprises response information of one of the following:
accepting the modification of the charging signal parameter, to use the modified charging signal parameter as the charging signal parameter;
not accepting the modification of the charging signal parameter and transmitting, in the negotiation response frame, the charging signal parameter suggested by the AP and a TXOP allocated for the AMP device to the AMP device to continue negotiating the charging signal parameter; and
rejecting the modification of the charging signal parameter, maintaining the periodic basic charging signal to charge the AMP device.

54. The method according to any one of claims 44 to 53, wherein the charging signal parameter comprises at least one of the following: signal power, modulation scheme, transmission frequency band, whether charging is periodic, a charging duration window, a charging signal interval, a charging duration window offset, and a charging delay.

55. The method according to any one of claims 45 to 54, further comprising: receiving a negotiated charging signal determined based on the charging signal parameter from the charging device and receiving a trigger frame from the AP device, and transmitting communication data to the AP device.

56. The method according to any one of claims 29 to 55, further comprising: receiving an indication message for instructing the AMP device to stop receiving a charging signal and to remain offline or powered off until receiving a next wake-up signal.

57. The method according to any one of claims 29 to 56, wherein each of the periodic basic charging signals comprises at least one of the following parameters: a transmission power of the charging device, a basic signal power, a modulation scheme, a transmission frequency band, an identifier of the charging device, a charging window, a window offset, and a charging interval.

58. A method performed by an access point (AP) device for implementing a charging link, comprising:
transmitting a detection indication for an ambient power (AMP) device to a charging device, wherein the detection indication is used to instruct the charging device to, in response to detecting the AMP device, transmit a wake-up signal to the AMP device; and
receiving a charging capability parameter of the AMP device from the AMP device, wherein the charging capability parameter of the AMP device is transmitted based on a periodic basic charging signal.

59. The method according to claim 58, wherein the charging capability parameter comprises at least one of the following:
a Sub-1GHz (S1G) support parameter, a maximum reception power, a maximum transmission distance, a maximum number of receiving antennas, a receiving antenna identifier, and a maximum number of supported charging sessions or links.

60. The method according to claim 58 or 59, wherein receiving the charging capability parameter comprises: receiving a frame for carrying the charging capability parameter;
wherein the frame for carrying the charging capability parameter comprises a charging capability element, the charging capability element comprises an element ID field and a charging capability parameter field, wherein the element ID field indicates an ID identifier of the charging capability element, and the charging capability parameter field indicates the charging capability parameter of the AMP device.

61. The method according to claim 60, wherein the charging capability element further comprises a length field and an element ID extension field;
wherein the length field indicates a length of a remaining field of the charging capability element other than the element ID field and the length field, the element ID extension field indicates whether the charging capability element has an extended ID, whether the element ID field and the element ID extension field have a fixed length, and whether the length field and the charging capability parameter field have a variable length.

62. The method according to any one of claims 58 to 61, further comprising:
transmitting a charging capability parameter of the charging device to the AMP device.

63. The method according to claim 62, wherein the charging capability parameter of the charging device comprises at least one of the following:
an S1G support parameter, a maximum transmission power, a maximum transmission distance, a maximum number of transmitting antennas, a transmitting antenna identifier, and a maximum number of supported charging sessions or links.

64. The method according to claim 62 or 63, wherein transmitting the charging capability parameter of the charging device comprises: transmitting a frame for carrying the charging capability parameter of the charging device;
wherein the frame for carrying the charging capability parameter of the charging device comprises a charging capability element, the charging capability element of the charging device comprises an element ID field and a charging capability parameter field, wherein the element ID field indicates an ID identifier of the charging capability element, and the charging capability parameter field indicates the charging capability parameter of the charging device.

65. The method according to claim 64, wherein the charging capability element of the charging device further comprises a length field and an element ID extension field;
wherein the length field indicates a length of a remaining field of the charging capability element of the charging device other than the element ID field and the length field, the element ID extension field indicates whether the charging capability element has an extended ID, whether the element ID field and the element ID extension field have a fixed length, and whether the length field and the charging capability parameter field have a variable length.

66. The method according to any one of claims 58 to 65, further comprising:
transmitting a charging signal parameter to the charging device.

67. The method according to claim 66, wherein the charging device is the AP device, and the charging signal parameter is determined by the following:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a query response frame carrying feedback indicating that negotiation is not required from the AMP device;
transmitting a confirmation frame indicating that negotiation is not required to the AMP device; and
maintaining, based on the confirmation frame, the periodic basic charging signal to charge the AMP device.

68. The method according to claim 66, wherein the charging device is the AP device, and the charging signal parameter is determined by the following:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a negotiation request frame carrying a charging signal parameter requested by the AMP device and/or a feedback result from the AMP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
transmitting, to the AMP device, a negotiation response frame comprising a charging signal parameter suggested by the AP device and/or a response result; and
determining the charging signal parameter based on the negotiation request frame and the negotiation response frame.

69. The method according to claim 66, wherein the charging device is the AP device, and the charging signal parameter is determined by the following:
transmitting a query frame to the AMP device, wherein the query frame comprises query information querying whether the AMP device needs charging negotiation and indicates a transmission opportunity (TXOP) allocated by the AP device for the AMP device;
receiving, within the TXOP, a negotiation request frame carrying feedback indicating a delayed query and a requested charging signal parameter from the AMP device, wherein the charging signal parameter further comprises at least one of the following: a delay time and n query intervals, where n is a positive integer greater than or equal to 1; and
transmitting, to the AMP device, a negotiation response frame comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

70. The method according to claim 66, wherein the charging device is a relay node, and the charging signal parameter is determined by the following:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a query response frame carrying feedback indicating that negotiation is not required from the AMP device;
transmitting a confirmation frame indicating that negotiation is not required to the relay node; and
maintaining, by the relay node based on the confirmation frame, the periodic basic charging signal to charge the AMP device.

71. The method according to claim 66, wherein the charging device is a relay node, and the charging signal parameter is determined by the following:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a negotiation request frame carrying a charging signal parameter requested by the AMP device and/or a feedback result from the AMP device, wherein the feedback result comprises requiring an immediate modification of the charging signal parameter, and the negotiation request frame comprises at least one of the following charging signal parameters: signal power, modulation scheme, transmission frequency band, whether charging is periodic, a charging window, a charging interval, a charging window offset, and a charging delay;
transmitting, via the relay node, a negotiation response frame comprising a charging signal parameter suggested by the AP device and/or a response result to the AMP device;
determining the charging signal parameter based on the negotiation request frame and the negotiation response frame; and
transmitting a confirmation frame carrying the charging signal parameter to the relay node.

72. The method according to claim 66, wherein the charging device is a relay node, and the charging signal parameter is determined by the following:
transmitting, via the relay node, a query frame to the AMP device, wherein the query frame comprises query information querying whether the AMP device needs charging negotiation and indicates a transmission opportunity (TXOP) allocated by the AP device for the AMP device;
receiving, via the relay node within the TXOP, a negotiation request frame carrying feedback indicating a delayed query and a requested charging signal parameter from the AMP device, wherein the charging signal parameter further comprises at least one of the following: a delay time and n query intervals, where n is a positive integer greater than or equal to 1; and
transmitting, via the relay node, a negotiation response frame to the AMP device comprising one of the following:
confirmation information comprising: accepting the delayed query, maintaining the periodic basic charging signal to charge the AMP device, and re-transmitting the query frame to the AMP device and re-allocating a TXOP for the AMP device after the delay time or the n query intervals; and
rejection information and a TXOP allocated for the AMP device, for the AP device to continue negotiation with the AMP to determine the charging signal parameter.

73. The method according to claim 68 or 71, wherein the response result comprises response information of one of the following:
accepting the modification of the charging signal parameter, to use the modified charging signal parameter as the charging signal parameter;
not accepting the modification of the charging signal parameter and transmitting, in the negotiation response frame, the charging signal parameter suggested by the AP and a TXOP allocated for the AMP device to the AMP device to continue negotiating the charging signal parameter; and
rejecting the modification of the charging signal parameter, maintaining the periodic basic charging signal to charge the AMP device.

74. The method according to claim 66, wherein the charging device is the auxiliary node or the backscatter reader, the method further comprising:
transmitting, to the charging device, a charging signal parameter determined based on a negotiation between the AMP device and the AP device.

75. The method according to any one of claims 66 to 74, wherein the charging signal parameter comprises at least one of the following: signal power, modulation scheme, transmission frequency band, whether charging is periodic, a charging duration window, a charging signal interval, a charging duration window offset, and a charging delay.

76. The method according to any one of claims 66 to 75, wherein determining the charging signal parameter comprises: determining a frame for carrying the charging signal parameter;
wherein the frame for carrying the charging signal parameter comprises a charging parameter element, the charging parameter element comprises an element ID field and a charging signal parameter field, the element ID field indicating an ID identifier of the element, and the charging signal parameter field representing the charging signal parameter requested by the AMP device or the charging signal parameter suggested by the AP device.

77. The method according to claim 76, wherein the charging parameter element further comprises a length field and an element ID extension field;
wherein the length field indicates a length of a remaining field of the charging parameter element other than the element ID field and the length field, the element ID extension field indicates whether the charging parameter element has an extended ID, whether the element ID field and the element ID extension field have a fixed length, and whether the length field and the charging signal parameter field have a variable length.

78. The method according to any one of claims 58 to 77, further comprising: transmitting, to the AMP device, an indication message for instructing the AMP device to stop receiving a charging signal and to remain offline or powered off until receiving a next wake-up signal.

79. The method according to any one of claims 58 to 78, wherein in a scenario of multiple charging links where a plurality of AMP devices are present, the charging device is capable of establishing a respective charging link with each of the plurality of AMP devices to charge said AMP device, and each charging link among the multiple charging links is indicated by a respective link ID identifier among a plurality of link ID identifiers.

80. The method according to any one of claims 58 to 79, wherein each of the periodic basic charging signals comprises at least one of the following parameters: a transmission power of the charging device, a basic signal power, a modulation scheme, a transmission frequency band, an identifier of the charging device, a charging duration window, a charging duration window offset, and a charging signal interval.

81. A charging device, comprising:
a processor configured to execute the method according to any one of claims 1 to 28.

82. An ambient power (AMP) device, comprising:
a processor configured to execute the method according to any one of claims 29 to 57.

83. An access point (AP) device, comprising:
a processor configured to execute the method according to any one of claims 58 to 80.

84. A chip, comprising:
a processor configured to call and run a computer program stored in a memory, to cause a device in which the chip is installed to execute the method according to any one of claims 1 to 28.

85. A chip, comprising:
a processor configured to call and run a computer program stored in a memory, to cause a device in which the chip is installed to execute the method according to any one of claims 29 to 57.

86. A chip, comprising:
a processor configured to call and run a computer program stored in a memory, to cause a device in which the chip is installed to execute the method according to any one of claims 58 to 80.

87. A computer-readable storage medium having a computer program stored therein, wherein the computer program causes a computer to execute the method according to any one of claims 1 to 28.

88. A computer-readable storage medium having a computer program stored therein, wherein the computer program causes a computer to execute the method according to any one of claims 29 to 57.

89. A computer-readable storage medium having a computer program stored therein, wherein the computer program causes a computer to execute the method according to any one of claims 58 to 80.

90. A computer program product, comprising a computer program, wherein the computer program causes a computer to execute the method according to any one of claims 1 to 28.

91. A computer program product, comprising a computer program, wherein the computer program causes a computer to execute the method according to any one of claims 29 to 57.

92. A computer program product, comprising a computer program, wherein the computer program causes a computer to execute the method according to any one of claims 58 to 80.
